# EUROPEAN PATENT APPLICATION

(11) **EP 1 369 798 A2**
(43) Date of publication of application: **10.12.2003**
(21) Application number: 03012362.4
(22) Date of filing: 30.05.2003
(51) Int. Cl.: G06F 17/60

(54) **Security rating system**

(30) Priority: 31.05.2002 JP 2002158595; 03.09.2002 JP 2002257497
(71) Applicant: Sato, Michihiro, Tokyo 102-0076 (JP)
(72) Inventor: The designation of the inventor has not yet been filed
(74) Representative: Hofer, Dorothea, Dipl.-Phys.

(57) **Abstract**

A security rating system constituted to have a security rating server having a security information table recording means, a rating value calculating means for calculating rating values and recording them on the security information table, and a security information transmitting means for transmitting the security information table to a security rating client; and a security rating client having a security information table transmission request transmission means for transmitting a security information table transmission request to the security rating server, and a security information table receiving means for receiving a security information table form the security rating server.

Thus, according to the present invention, it is possible to provide a security rating system and the like that objectively rate a security in the sense that all securities with a common security element, for example, the "Guarantor, e.g., "the Government of Japan," are assigned with the same rating contribution value.

## Description

### BACKGROUND OF THE INVENTION

### Field of the Invention:

The invention relates to systems, servers, methods, programs and computer-readable recording media that handle rating of securities.

### Description of Related Art:

Investors who invested in bonds become unable to receive redemptions of principals and payments of interests when the bond issuers' operating conditions deteriorate.

Investors who are considering investments in bonds must therefore make various judgments prior to investments on certainties of redemptions of principals and payments of interests of the bonds (hereinafter called "safety of bond" ) .

While there are various grounds for judging the safety of a bond including information provided by the bond issuer and the credibility of the bond issuer in the society, one of the most credible information trusted by investors in judging the safety of a bond is the "bond rating" using simply codes such as AAA ("triple A"), AA ("double A") and A ("single A") to denote the safety of bonds.

The bond rating process has hitherto been provided by an institution that is believed to hold a fair and impartial position.

However, although it attempts to hold a fair and impartial position, such a rating institution performs the rating process solely dependant on its own evaluation of the bond. Therefore, there has been no guaranty on whether the rating of a bond is done objectively in relation to the rating of another bond.

Under the circumstances, it is an intention of the present invention to provide a security rating system, a security rating method, a security rating server, a security rating server control method, a security rating server control program, a computer-readable recording medium storing the security rating server control program, a security rating client, a security rating client control method, a security rating client control program, a computer-readable recording medium recording the security rating client control program, amanager, a manager control method, a manager control program, and a computer-readable recording medium recording the manager control program that perform rating of bonds by providing an equal "rating contribution value" to all bonds that share a common bond element, for example, a common "guarantor," e.g., "the Government of Japan."

### SUMMARY OF THE INVENTION

The abovementioned problem can be solved by the present invention described below.

The invention provides a security rating system having a security rating server anda security rating client connected with said security rating server via a communication network, where in said security rating server has: a security information table storing means for storing a security information table that records security elements, i.e., data that constitute a security, for each security; a rating value calculating means for calculating a sum of rating contribution values for each security information table using a rating contribution value table, which stores contributing values for rating of securities belonging to said security elements as rating contribution values, and recording said sum of rating contribution values thus calculated as a rating value in said security information table; and a security information table transmitting means for transmitting said security information table to said security rating client when a security information table transmission request is received from said security rating client, and said security rating client has : a security information table transmission request transmitting means for transmitting said security information table transmission request to said security rating server, and a security information table receiving means for receiving said security information table from said security rating server.

The present invention also provides a security rating system having a security rating server and a security rating client as well as a manager connected with said security rating server via a communication network, wherein
said security rating server has: a security information table storing means for storing a security information table that records security elements, i.e., data that constitute a security, for each security; a rating value calculating means for calculating a sum of rating contribution values for each security information table using a rating contribution value table, which stores contributing values for rating of securities belonging to said security elements as rating contribution values, and recording said sum of rating contribution values thus calculated as a rating value in said security information table; a security information table transmitting means for transmitting said security information table to said security rating client when a security information table transmission request is received from said security rating client; and a rating contribution value table updating means for updating said rating contribution value to be recorded on said rating contribution value table when a rating contribution value table updating request is received from said manager, said security rating client has: a security information table transmission request transmitting means for transmitting said security information table transmission request to said security rating server, and a security information table receiving means for receiving said security information table from said security rating server; and said manager has a rating contribution value table updating request transmitting means for transmitting said rating contribution value table updating request to said security rating server.

The present invention also provides a security rating system as described above, wherein said security rating server further has: a comparative security rating value information generating and transmitting means for generating comparative security rating value information comparing said security rating values for a plurality of securities recorded on their respective security information tables and transmitting it to said security rating client when a comparative security rating value information transmission request is received from said security rating client, and said security rating client further has : a comparative security rating value information transmission request transmitting means for transmitting said comparative security rating value information transmission request to said security rating server; and a comparative security rating value information receiving means for receiving said comparative security rating value information from said security rating sever.

The present invention also provides a security rating system as described above, wherein said security rating server further has: a transmission counting means for incrementing by one the number of transmissions, which is a security element recorded on said security information table, each time when said security information table is transmitted to said security rating client by said security information table transmitting means.

The present invention also provides a security rating method used in a security rating system having a security rating server and a security rating client connected with said security rating server via a communication network, having: a security information table storing step for said security rating server to store a security information table that records security elements, i.e., data that constitute a security, for each security; a rating value calculating step for said security rating server to calculate a sum of rating contribution values for each security information table using a rating contribution value table, which stores contributing values for rating of securities belonging to said security elements as rating contribution values, and recording said sum of rating contribution values thus calculated as a rating value in said security information table; a security information table transmission request transmitting step for said security rating client to transmit a security information table transmission request to said security rating server; a security information table transmitting step for said security rating server to transmit said security information table to said security rating client when said security information table transmission request is received from said security rating client; and a security information table receiving step for said security rating client to receive said security information table from said security rating server.

The present invention also provides a security rating method used in a security rating system having a security rating server and a security rating client as well as a manager connected with said security rating server via a communication network, having: asecurityinformationtablestoringstep for said security rating server to store a security information table that records security elements, i.e., data that constitute a security, for each security; a rating value calculating step for said security rating server to calculate a sum of rating contribution values for each security information table using a rating contribution value table, which stores contributing values for rating of securities belonging to said security elements as rating contribution values, and record said sum of rating contribution values thus calculated as a rating value in said security information table; a security information table transmission request transmitting step for said security rating client to transmit a security information table transmission request to said security rating server; a security information table transmitting step for said security rating server to transmit said security information table to said security rating client when said security information table transmission request is received from said security rating client; a security information table receiving step for said security rating client to receive said security information table from said security rating server; a rating contribution value table updating request transmitting step for saidmanager to transmit a rating contribution value table update request to said security rating server, and a rating contribution value table updating step for said security rating server to update said rating contribution value to be recorded on said rating contribution value table when a rating contribution value table updating request is received from said manager.

The present invention also provides a security rating method as described above further having: a comparative security rating value information transmission request transmitting step for said security rating client to transmit a comparative security rating value information transmission request to said security rating server; a comparative security rating value information generating and transmitting step for said security rating server to generate comparative security rating value information comparing said security rating values for a plurality of securities recorded on their respective security information tables and transmit it to said security rating client when a comparative security rating value information transmission request is received from said security rating client; and a comparative security rating value information receiving step for said security rating client to receive said comparative security rating value information from said security rating server.

The present invention also provides a security rating method as described above further having: a transmission counting step for said security rating server to increment by one the number of transmissions, which is a security element recorded on said transmitted security information table, each time when said security information table is transmitted to said security rating client.

The present invention also provides a security rating server connected with a security rating client via a communication network having: a security information table storing means for storing a security information table that records security elements, i.e., data that constitute a security, for each security; a rating value calculating means for calculating a sum of rating contribution values for each security information table using a rating contribution value table, which stores contributing values for rating of securities belonging to said security elements as rating contribution values, and recording said sum of rating contribution values thus calculated as a rating value in said security information table; and a security information table transmitting means for transmitting said security information table to said security rating client when receiving a security information table transmission request is received from said security rating client.

The present invention also provides a security rating server connected with a security rating client as well as a management client via a communication network having: a security information table storing means for storing a security information table that records security elements, i.e., data that constitute a security, for each security; a rating value calculating means for calculating a sum of rating contribution values for each security information table using a rating contribution value table, which stores contributing values for rating of securities belonging to said security elements as rating contribution values, and recording said sumof rating contribution values thus calculated as a rating value in said security information table; a security information table transmitting means for transmitting said security information table to said security rating client when receiving a security information table transmission request is received from said security rating client; and a rating contribution value table updating means for updating said rating contribution value to be recorded on said rating contribution value table when a rating contribution value table updating request is received from said manager.

The present invention also provides a security rating server as described above further having; a comparative security rating value information generating and transmitting means for generating comparative security rating value information comparing said security rating values for a plurality of securities recorded on their respective security information tables and transmitting it to said security rating client when a comparative security rating value information transmission request is received from said security rating client.

The present invention also provides a security rating server as described above further having: a transmission counting means for incrementing by one the number of transmissions, which is a security element recorded on said transmitted security information table, each time when said security information table is transmitted to said security rating client by said security information table transmitting means.

The present invention also provides a security rating server control method for a security rating server connected with a security rating client via a communication network having: a security information table storing step for storing a security information table that records security elements, i.e., data that constitute a security, for each security; a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table; and a security information table transmitting step for transmitting said security information table to said security rating client when a security information table transmission request is received from said security rating client.

The present invention also provides a security rating server control method for a security rating server connected with a security rating client as well as a management client via a communication network having: a security information table storing step for storing a security information table that records security elements, i.e., data that constitute a security, for each security; a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table; a security information table transmitting step for transmitting said security information table to said security rating client when a security information table transmission request is received from said security rating client; and a rating contribution value table updating step for updating said rating contribution value to be recorded on said rating contribution value table when a rating contribution value table updating request is received from said manager.

The present invention also provides a security rating server control method as described above further having: a comparative security rating value information generating and transmitting step for generating comparative security rating value information comparing said security rating values for a plurality of securities recorded on their respective security information tables and transmitting it to said security rating client when a comparative security rating value information transmission request is received from said security rating client.

The present invention also provides a security rating server control method as described above further having: a transmission counting step for incrementing by one the number of transmissions, which is a security element recorded on said transmitted security information table, each time when said security information table is transmitted to said security rating client.

The present invention also provides a security rating server control program for causing a security rating server connected with a security rating client via a communication network to execute: a security information table storing step for storing a security information table that records security elements, i.e., data that constitute a security, for each security; a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table; and a security information table transmitting step for transmitting said security information table to said security rating client when a security information table transmission request is received from said security rating client.

The present invention also provides a security rating server control program for causing a security rating server connected with a security rating client as well as a management client via a communication network to execute: a security information table storing step for storing a security information table that records security elements, i.e., data that constitute a security, for each security; a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table; a security information table transmitting step for transmitting said security information table to said security rating client when a security information table transmission request is received from said security rating client; and a rating contribution value table updating step for updating said rating contribution value to be recorded on said rating contribution value table when a rating contribution value table updating request is received from said manager.

The present invention also provides a security rating server control program as described above for causing said security rating server to execute: a comparative security rating value information generating and transmitting step for generating comparative security rating value information comparing said security rating values for a plurality of securities recorded on their respective security information tables and transmitting it to said security rating client when a comparative security rating value information transmission request is received from said security rating client.

The present invention also provides a security rating server control program as described above further causing said security rating server to execute : a transmission counting step for incrementing by one the number of transmissions, which is a security element recorded on said transmitted security information table, each time when said security information table is transmitted to said security rating client.

The present invention also provides a computer-readable recording medium storing said security rating server control programs.

The present invention also provides a security rating client connected with a security rating server via a communication network having: a security information table transmission request transmitting means for transmitting a security information table transmission request to said security rating server; and a security information table receiving means for receiving from said security rating server a security information table that records security elements, i.e., data that constitute a security, and a rating value, which is a sum of rating contribution values belonging to said security elements, for each security.

The invention also provides a security rating client as described above further having: a comparative security rating value information transmission request transmitting means for transmitting a comparative security rating value information transmission request to said security rating server; and a comparative security rating value information receiving means for receiving from said security rating server comparative security rating value information that compares said security rating values for a plurality of securities recorded on their respective security information tables.

The present invention also provides a security rating client control method for a security rating client connected with a security rating server via a communication network having: a security information table transmission request transmitting step for transmitting a security information table transmission request to said security rating server; and a security information table receiving step for receiving from said security rating server a security information table that records security elements, i.e., data that constitute a security, and a rating value, which is a sum of rating contribution values belonging to said security elements, for each security.

The invention also provides a security rating client control method as described above further having : a comparative security rating value information transmission request transmitting step for transmitting a comparative security rating value information transmission request to said security rating server; and a comparative security rating value information receiving step for receiving from said security rating server comparative security rating value information that compares said security rating values for a plurality of securities recorded on their respective security information tables.

The present invention also provides a security rating client control program for causing a security rating client connected with a security rating server via a communication network to execute: a security information table transmission request transmitting step for transmitting a security information table transmission request to said security rating server; and a security information table receiving step for receiving from said security rating server a security information table that records security elements, i.e., data that constitute a security, and a rating value, which is a sum of rating contribution values belonging to said security elements, for each security.

The invention also provides a security rating client control program as described above for further causing said security rating client to execute: a comparative security rating value information transmission request transmitting step for transmitting a comparative security rating value information transmission request to said security rating server; and a comparative security rating value information receiving step for receiving from said security rating server comparative security rating value information that compares said security rating values for a plurality of securities recorded on their respective security information tables.

The present invention also provides a computer-readable recording medium storing said security rating client control program.

The present invention also provides a manager connected with a security rating server via a communication network having: a rating contribution value table updating request transmitting means for transmitting to said security rating server a rating contribution value table updating request that requests to updates a rating contribution value stored in said rating contribution value table.

The present invention also provides a manager control method for a manager connected with a security rating server via a communication network having: a rating contribution value table updating request transmitting step for transmitting to said security rating server a rating contribution value table updating request that requests to updates a rating contribution value stored in said rating contribution value table.

The present invention also provides a manager control program for causing a manager connected with a security rating server via a communication network to execute: a rating contribution value table updating request transmitting step for transmitting to said security rating server a rating contribution value table updating request that requests to updates a rating contribution value stored in said rating contribution value table.

The inventional so provides a computer-readable recording medium storing said manager control program.

### BRIEF DESCRIPTION OF THE DRAWINGS

### Brief description of the drawings

Fig. 1 is a diagram showing a security rating system according to a first embodiment of the present invention.
Fig. 2 is a diagram showing the constitution of a security rating server 100a.
Fig. 3 is a diagram for describing each function of an execution program executed by a CPU of security rating server 100a according to the first embodiment.
Fig. 4 is a flowchart for describing a process executed by security rating server 100a.
Fig. 5 is a diagram showing a security rating system according to a second embodiment of the present invention.
Fig. 6 is a diagram for describing each function of an execution program executed by a CPU of a security rating server 100b according to the second embodiment.
Fig. 7 is a flowchart for describing a process executed by security rating server 100b.
Fig. 8 is a diagram showing a security rating system according to a third embodiment of the present invention.
Fig. 9 is a diagram for describing each function of an execution program executed by a CPU of a security rating server 100c according to the third embodiment.
Fig. 10 is a flowchart for describing a process executed by security rating server 100c.
Fig. 11 is a diagram showing a security rating system according to a fourth embodiment of the present invention.
Fig. 12 is a diagram for describing each function of an execution program executed by a CPU of security rating server 100d according to the fourth embodiment.
Fig. 13 is a flowchart for describing a process executed by security rating server 100d.
Fig. 14 is a rating contribution value table with reference to security titles.
Fig. 15 isaratingcontributionvaluetablewithreference to face values.
Fig. 16 is a rating contribution value table with reference to contents of public works.
Fig. 17 is a rating contribution value table with reference to planners.
Fig . 18 is a rating contribution value table with reference to executors.
Fig. 19 is a rat ing contribution value table with reference to guarantors.
Fig. 20 is a rating contribution value table with reference to redemption periods.
Fig . 21 is a rating contribution value table with reference to interest rates.
Fig. 22 is arating contribution value table with reference to guaranteed limits.
Fig. 23 is a rating contribution value table with reference to dividends.
Fig. 24 is a rating contribution value table with reference to numbers of issued sheets.
Fig. 25 is a rating contribution value table with reference to numbers of transmissions.
Fig. 26 shows a front page.
Fig. 27 shows Security Information Table No. 1.
Fig. 28 shows Security Information Table No. 2.
Fig. 29 shows Security Information Table No.3.
Fig. 30 shows Security Information Table No. 4.
Fig. 31 shows Security Information Table No. 5.
Fig. 32 shows Security Information Table No. 6.
Fig. 33 shows Security Information Table No. 7.
Fig. 34 shows Security Information Table No. 8.
Fig. 35 shows Security Information Table No. 9.
Fig. 36 shows Security Information Table No. 10.
Fig. 37 shows Security Information Table No. 11.
Fig. 38 shows Security Information Table No. 12.
Fig. 39 shows Security Information Table No. 13.
Fig. 40 shows Security Information Table No. 14.
Fig. 41 shows Security Information Table No. 15.
Fig. 42 shows Security Information Table No. 16.
Fig. 43 shows Security Information Table No. 17.
Fig. 44 shows Security Information Table No. 18.
Fig. 45 shows Security Information Table No. 19.
Fig. 46 shows Security Information Table No. 20.
Fig. 47 shows Security Information Table No. 21.
Fig. 48 shows Security Information Table No. 22.
Fig. 49 shows Security Information Table No. 23.
Fig. 50 shows Security Information Table No. 24.
Fig. 51 shows Security Information Table No. 25.
Fig. 52 shows Security Information Table No. 26.
Fig. 53 shows Security Information Table No. 27.
Fig. 54 shows Security Information Table No. 28.
Fig. 55 shows Security Information Table No. 29.
Fig. 56 shows Security Information Table No. 30.
Fig. 57 shows Security Information Table No. 31.
Fig. 58 shows Security Information Table No. 32.
Fig. 59 shows Security Information Table No. 33.
Fig. 60 shows Security Information Table No. 34.
Fig. 61 shows Security Information Table No. 35.
Fig. 62 shows Security Information Table No. 36.
Fig. 63 shows Security Information Table No. 37.
Fig. 64 shows Security Information Table No. 38.
Fig. 65 shows Security Information Table No. 39.
Fig. 66 shows Security Information Table No. 40.
Fig. 67 is a bar chart of rating values.
Fig. 68 is a bar chart of rating values.
Fig. 69 is a bar chart of rating values.
Fig. 70 is a bar chart of rating values.
Fig. 71 is a pie chart of rating values.

### DESCRIPTION OF THE PREFERRED EMBODIMENTS

Preferred embodiments of the present invention will be described below in detail with reference to the accompanying drawings.

### (First embodiment)

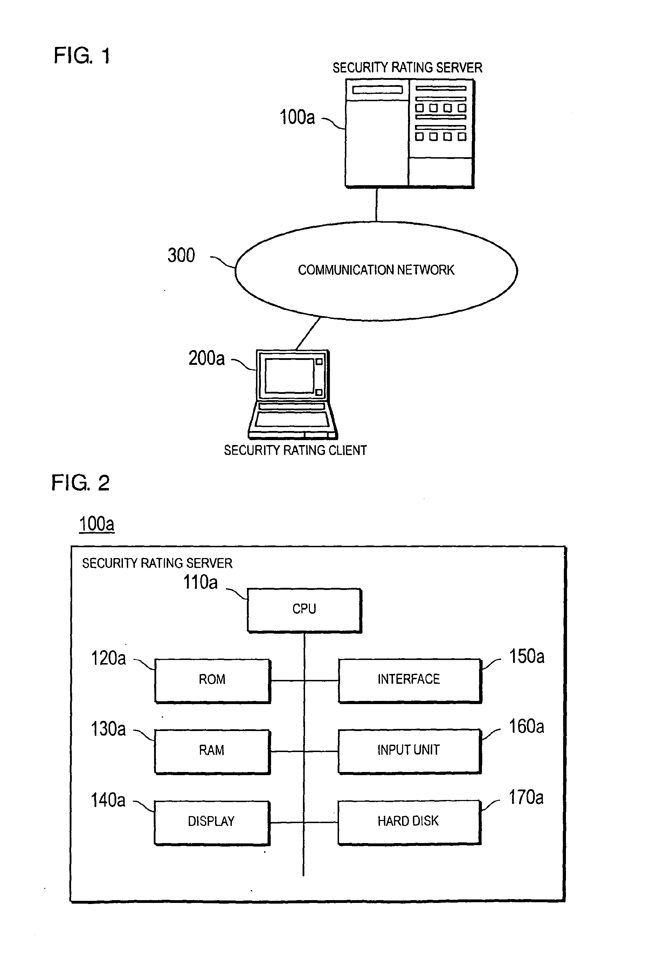

Fig. 1 is a diagram showing a security rating system according to a first embodiment of the present invention. As shown in Fig. 1, the security rating system according to the first embodiment of the present invention has a security rating server 100a, a communication network 300 connected to said security rating server 100a, and a security rating client 200a connected to communication network 300.

Security rating server 100a is a server computer such as a workstation or a personal computer.

Security rating client 200a is a client computer such as a desktop computer, personal computer, and PDA (Personal Digital Assistant).

Communication network 300 is a network such as the Internet or a telephone network or a combination thereof.

In the security rating system related to the first embodiment shown in Fig. 1, security rating server 100a and security rating client 200a communicate with each other via communication network 300.

Fig. 2 is a diagram showing the constitution of a security rating server 100a shown in Fig. 1.

As shown in Fig. 2, security rating server 100a has a CPU (Central Processing Unit) 110a for executing processes of security rating server 100a in accordance with programs, a ROM (Read Only Memory) 120a for storing various control programs, a RAM (Random Access Memory) 130a for temporarily storing data, a display 140a for displaying various data concerning process of security rating server 100a, an interface 150a such as an NIC (Network Interface Card) for executing communication controls via a communication network 300, an input unit 160a including a keyboard and a mouse for executing data input and operation instructions, and a hard disk 170a for storing execution programs such as an application program.

The process of security rating server 100a is performed by CPU 110a executing the execution program stored in a hard disk 170a. In this first embodiment, it will be described assuming the execution program is stored in hard disk 170a, but it is also possible in this invention to have the execution program stored in ROM 120a rather than hard disk 170a. In such a case, the process of security rating server 100a is performed by CPU 110a executing the execution program stored in ROM 120a.

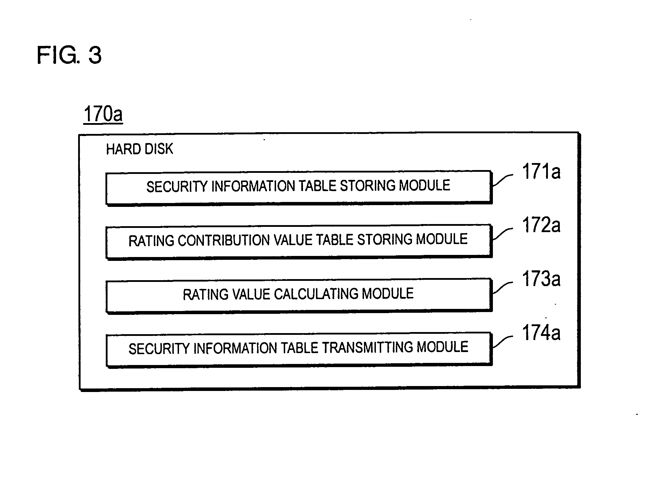

Fig. 3 is a diagram for describing each function of the execution program stored in hard disk 170a by module.

As shown in Fig. 3, the execution program has a security information table storing module 171a, a rating contribution value table storing module 172a, a rating value calculation module 173a, and a security information table transmitting module 174a.

Security information table storing module 171a is software that stores the security information table into hard disk 170a.

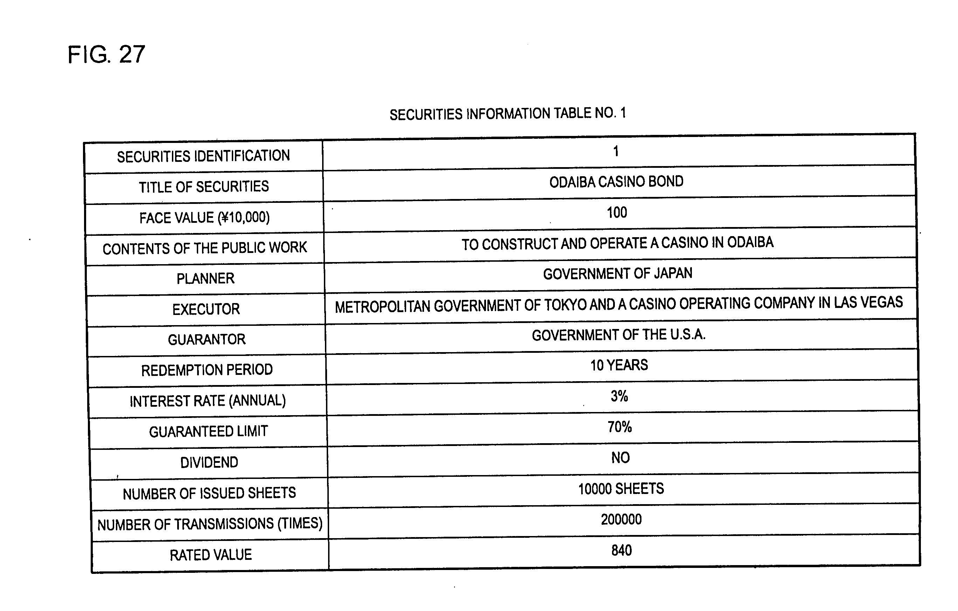

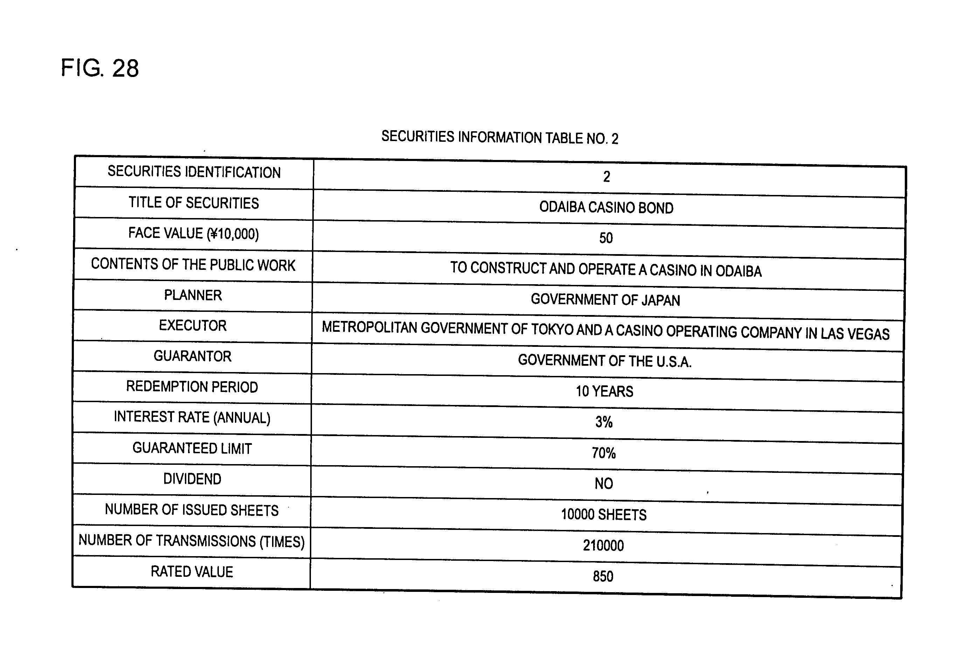

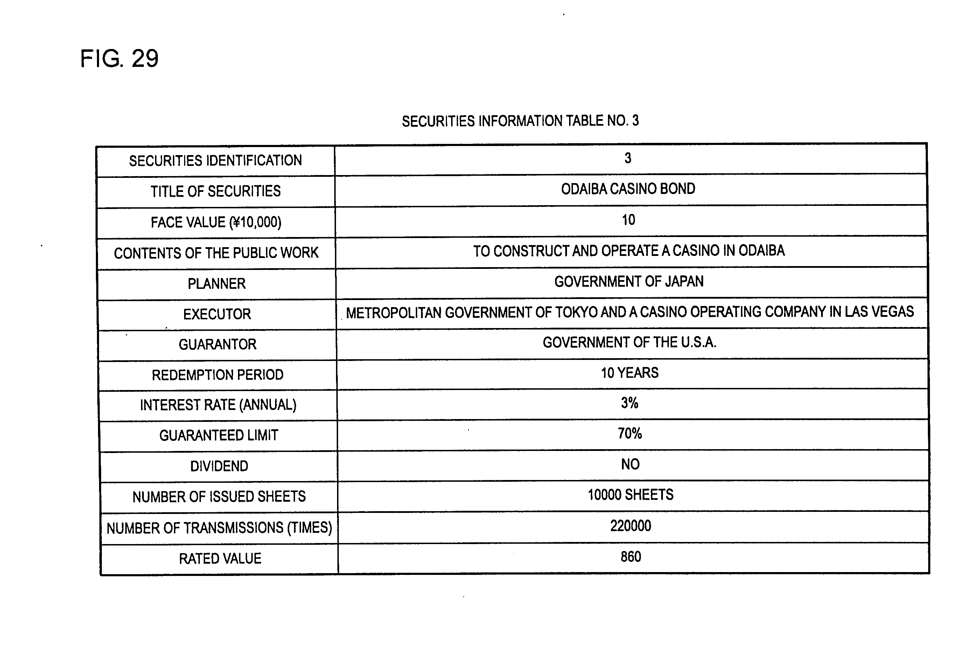

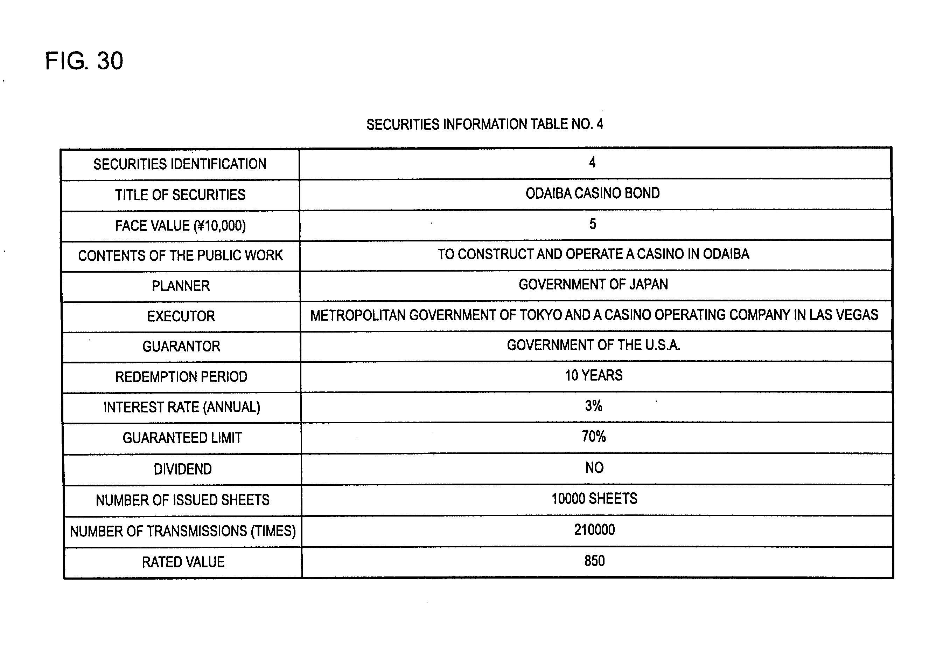

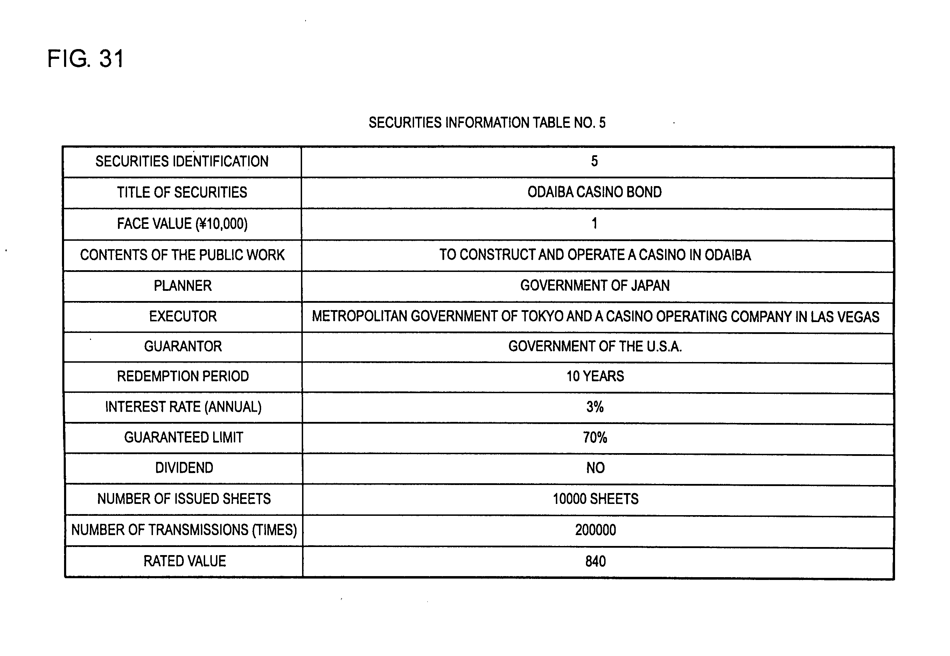

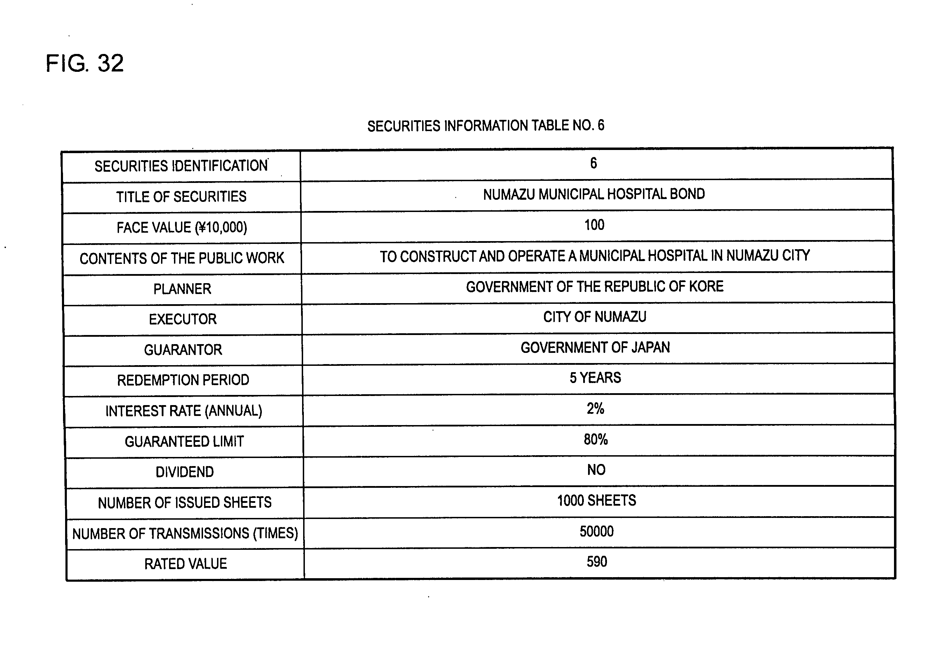

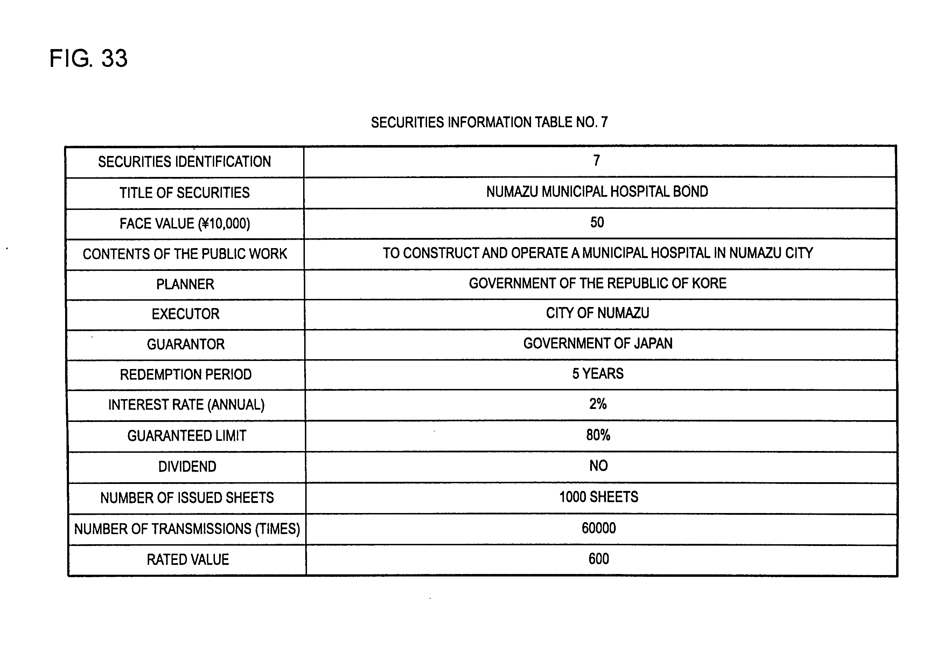

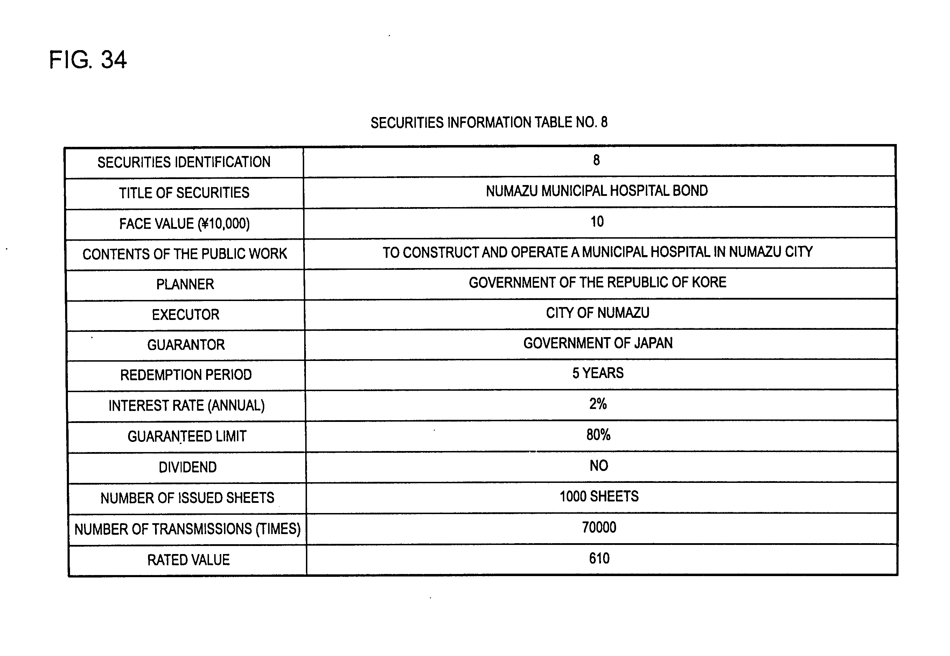

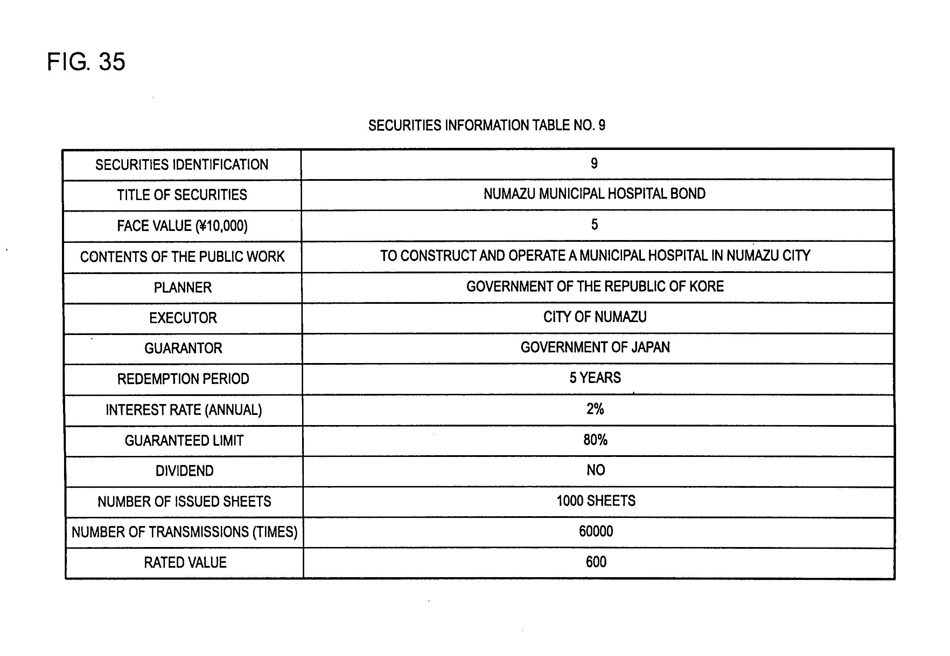

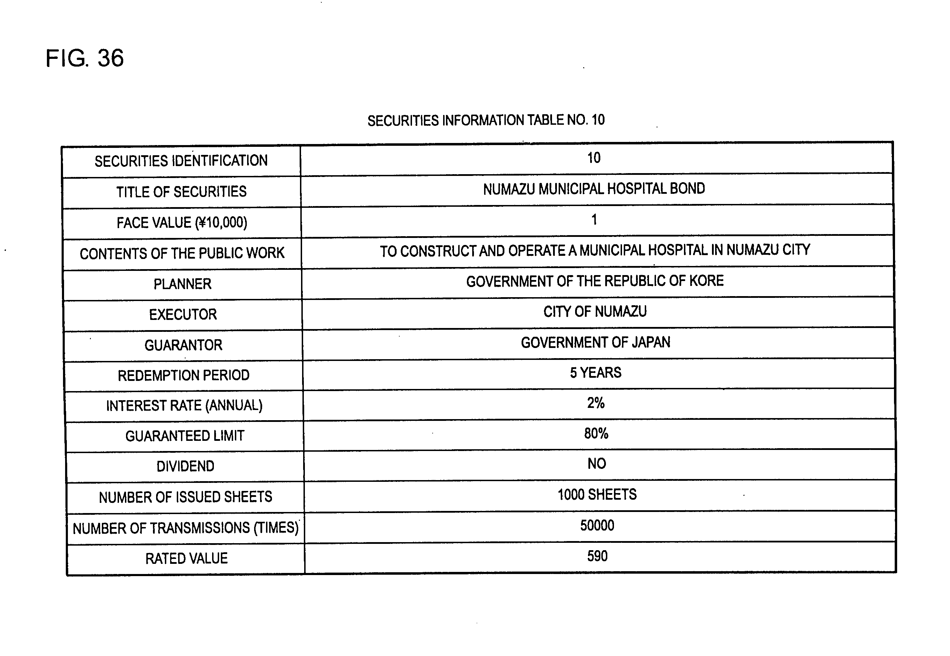

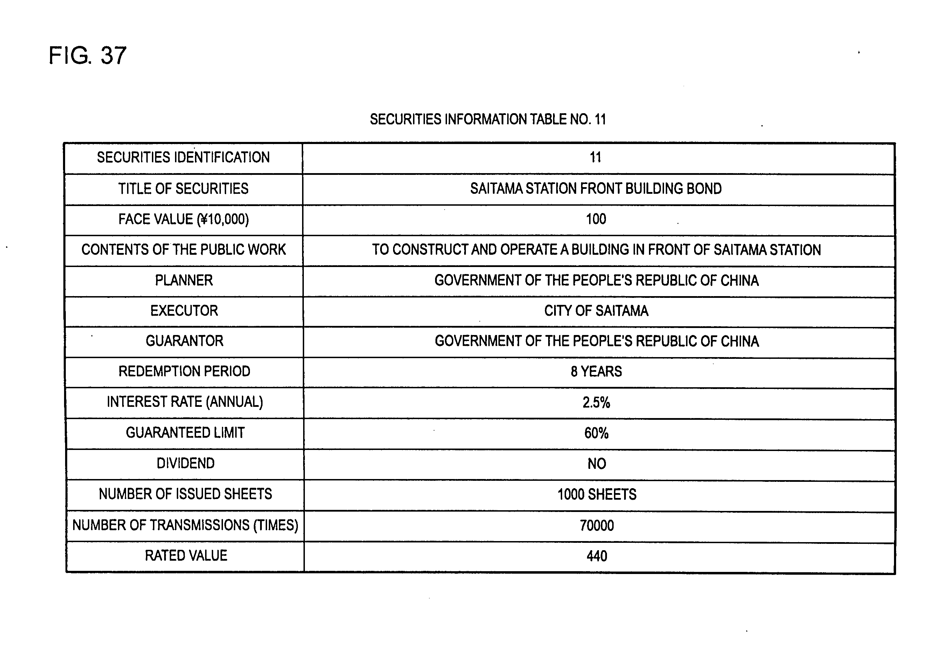

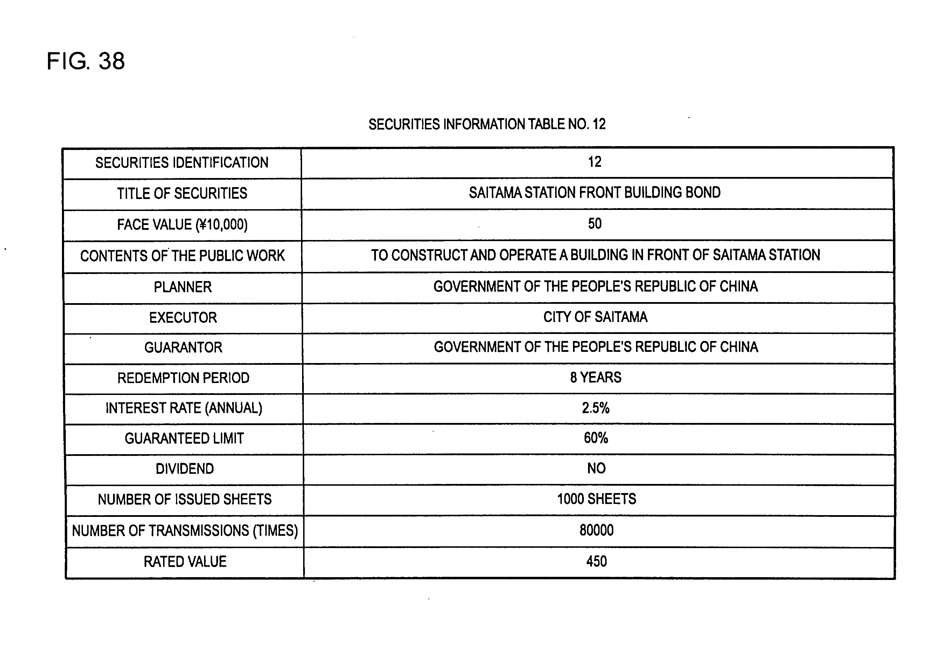

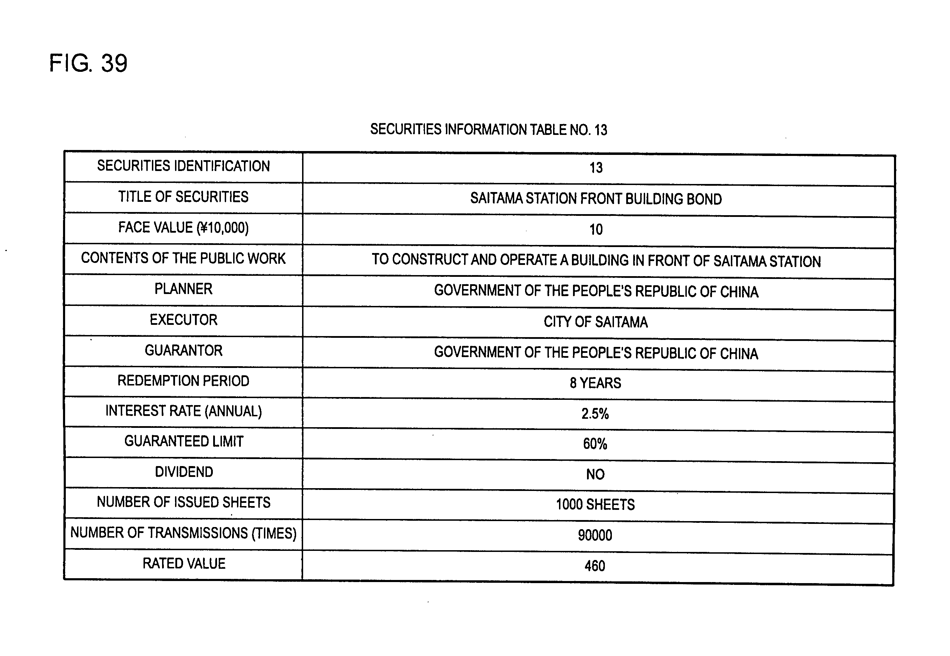

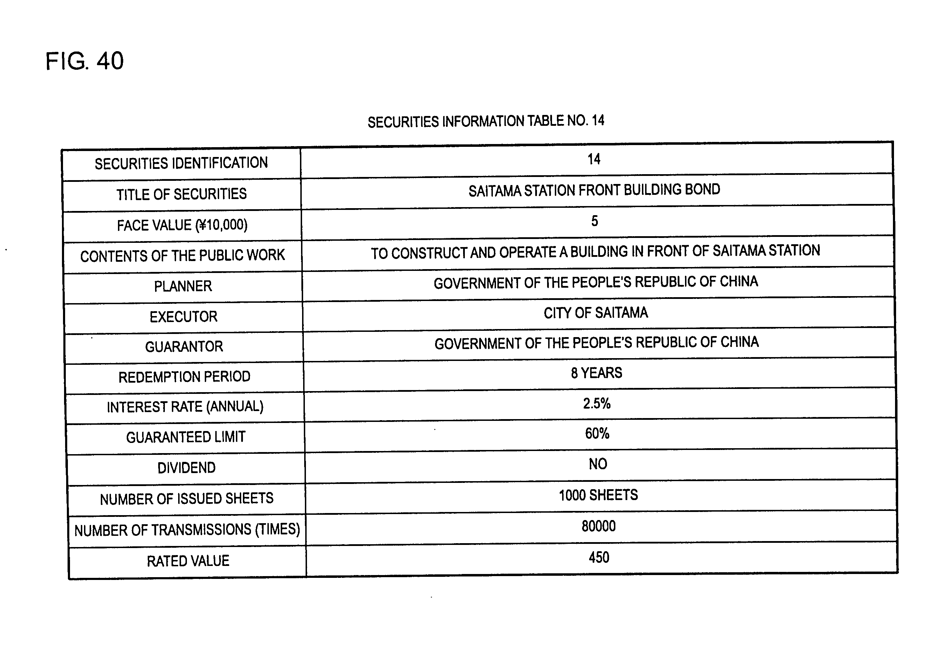

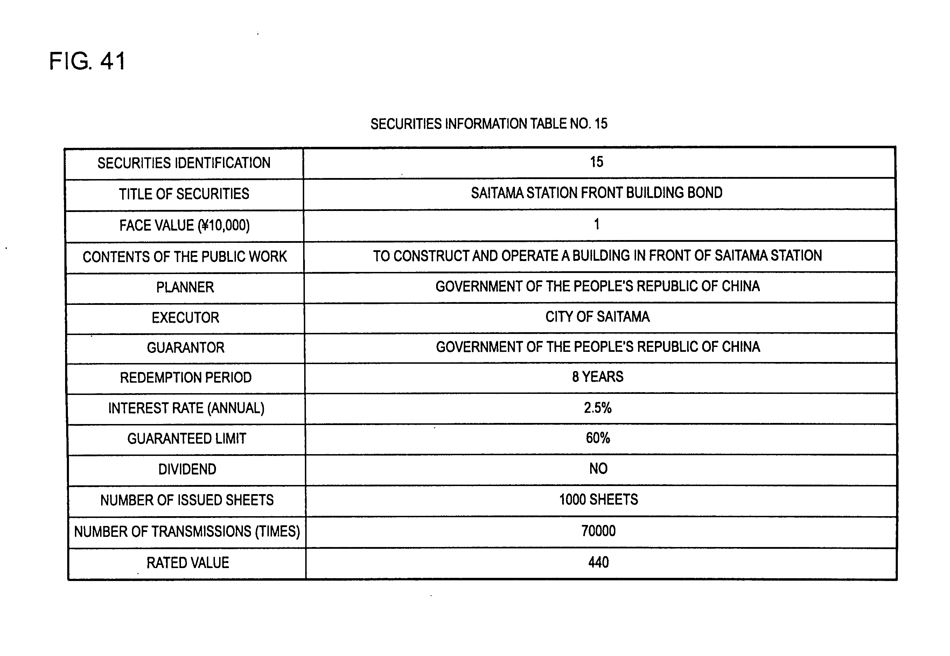

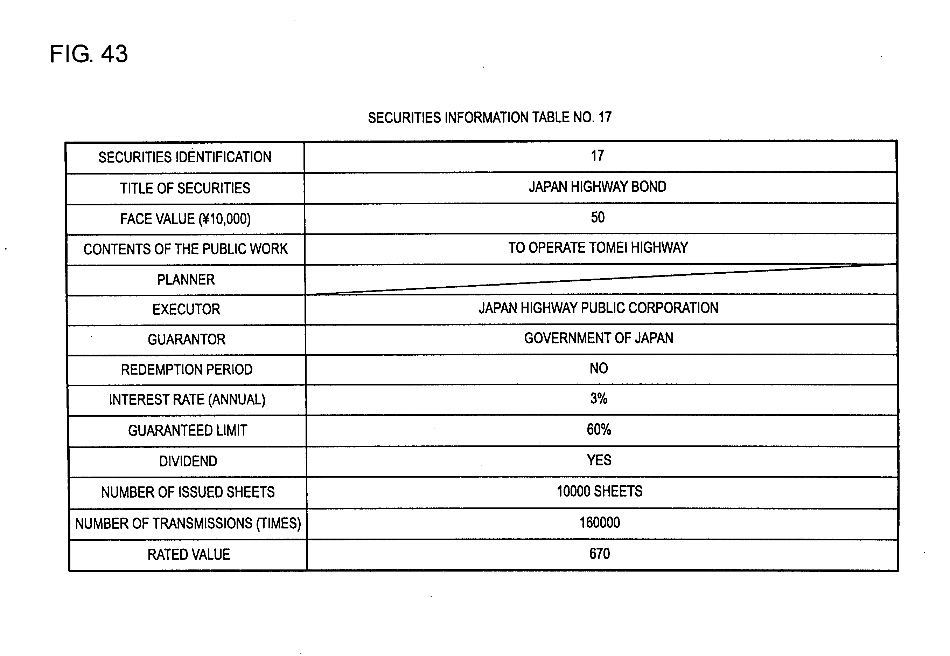

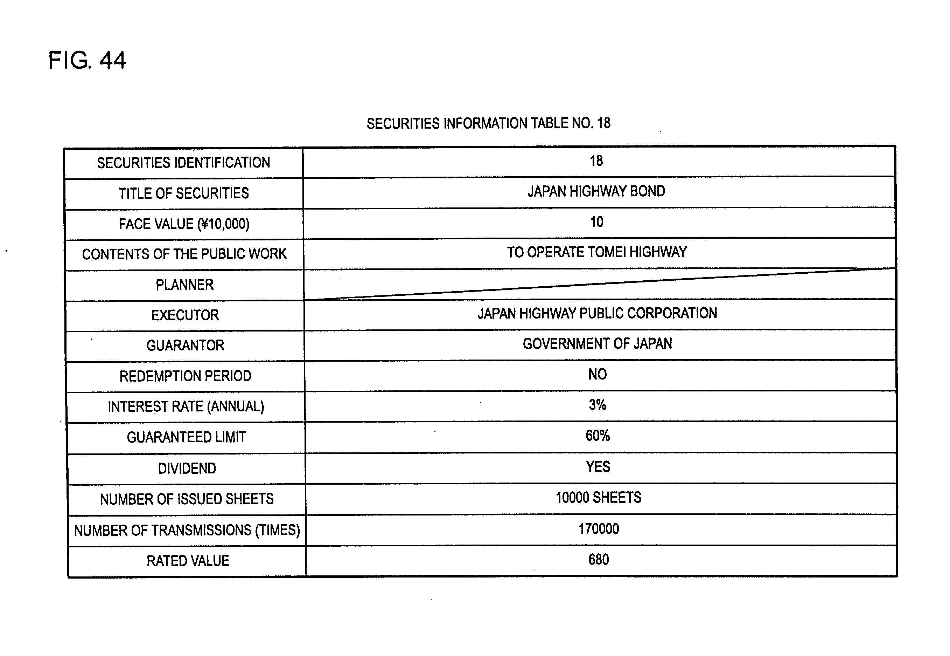

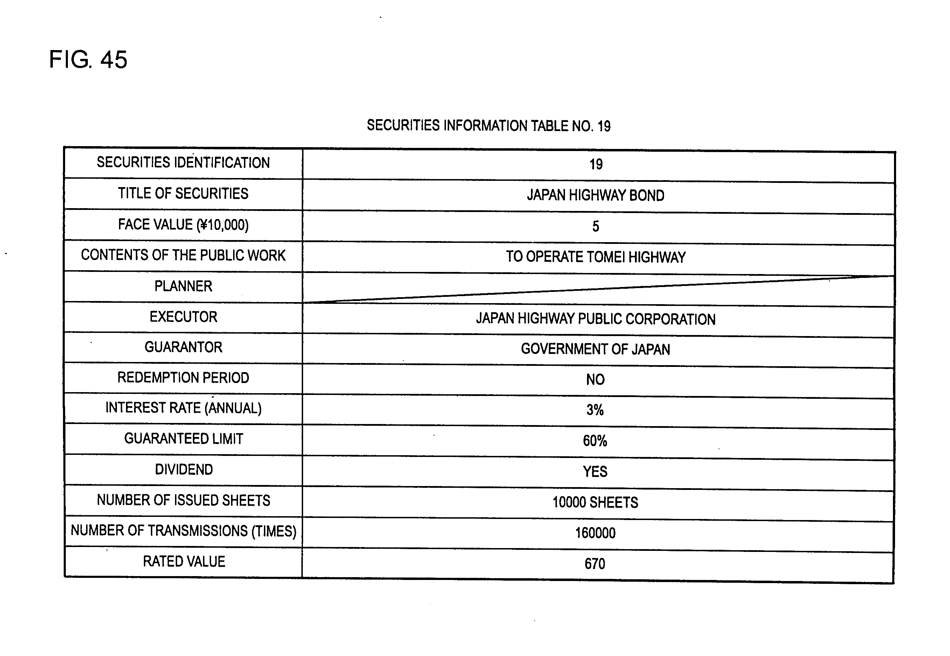

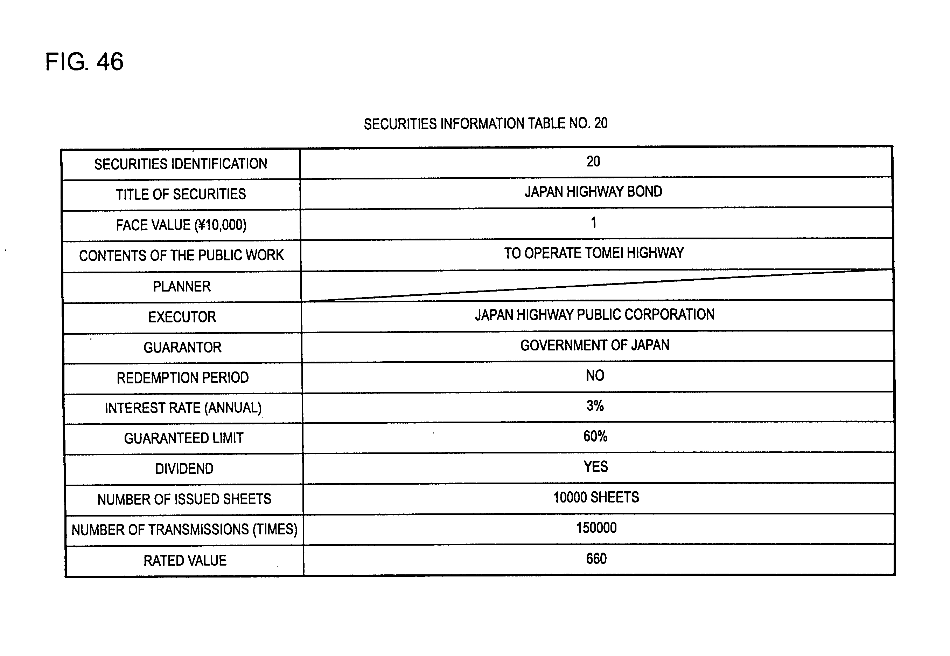

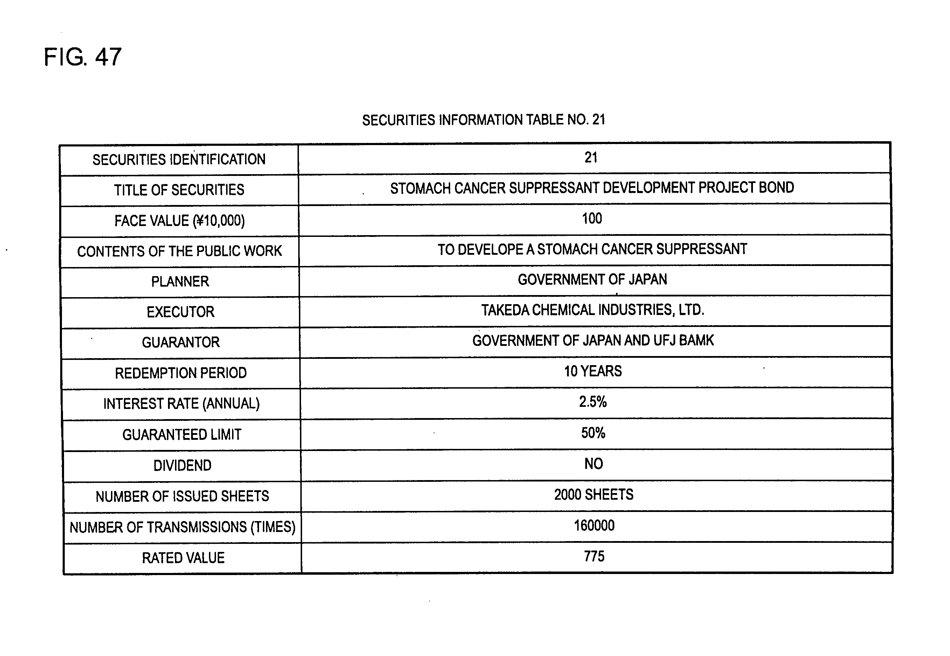

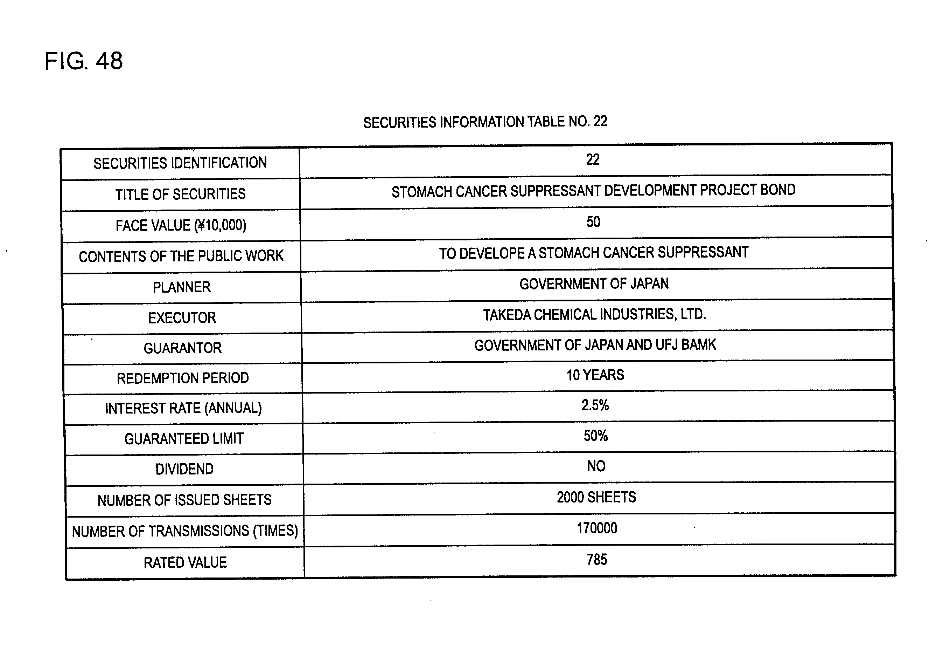

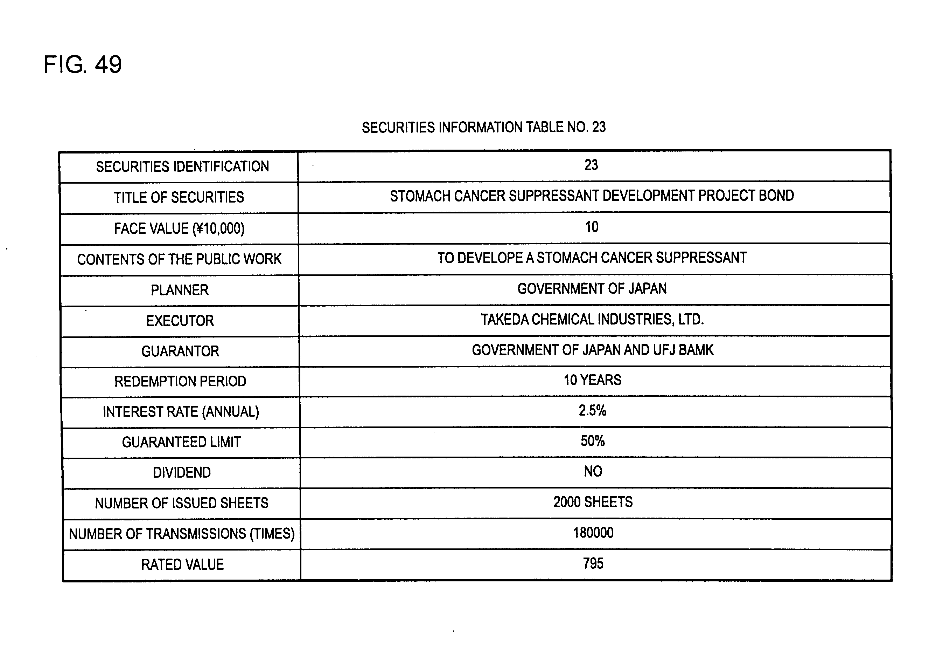

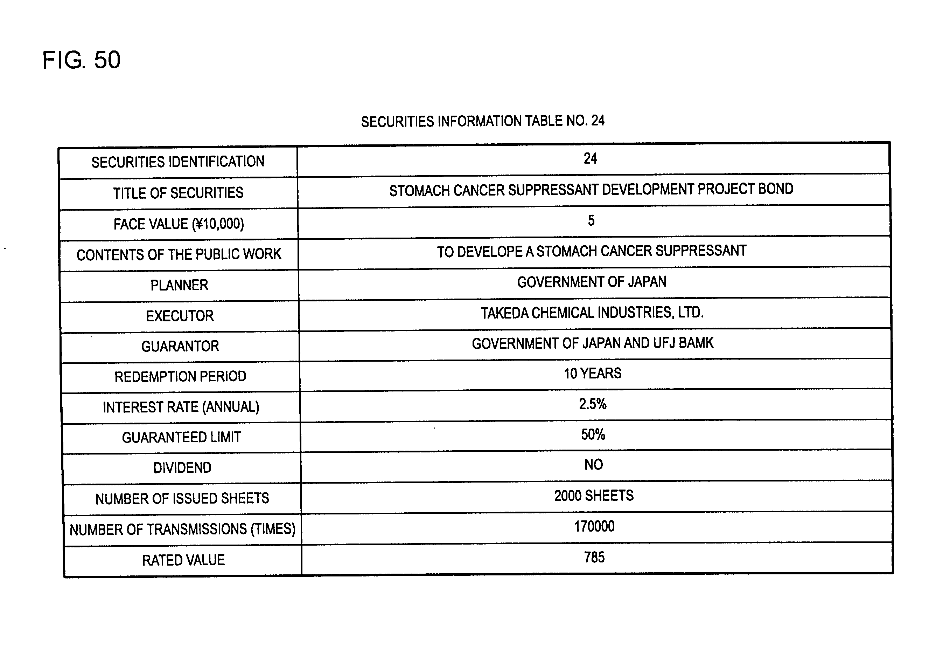

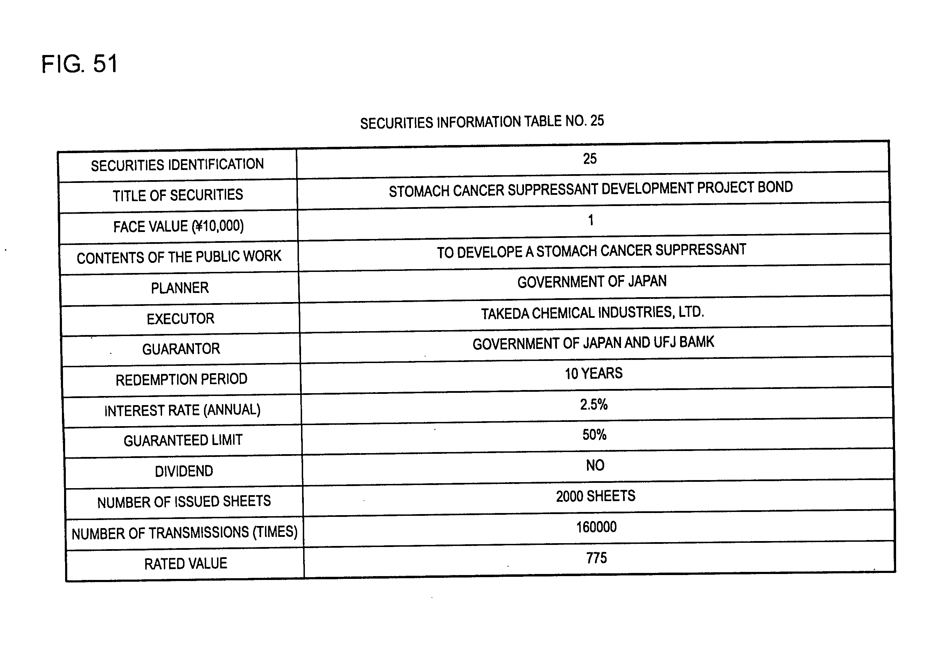

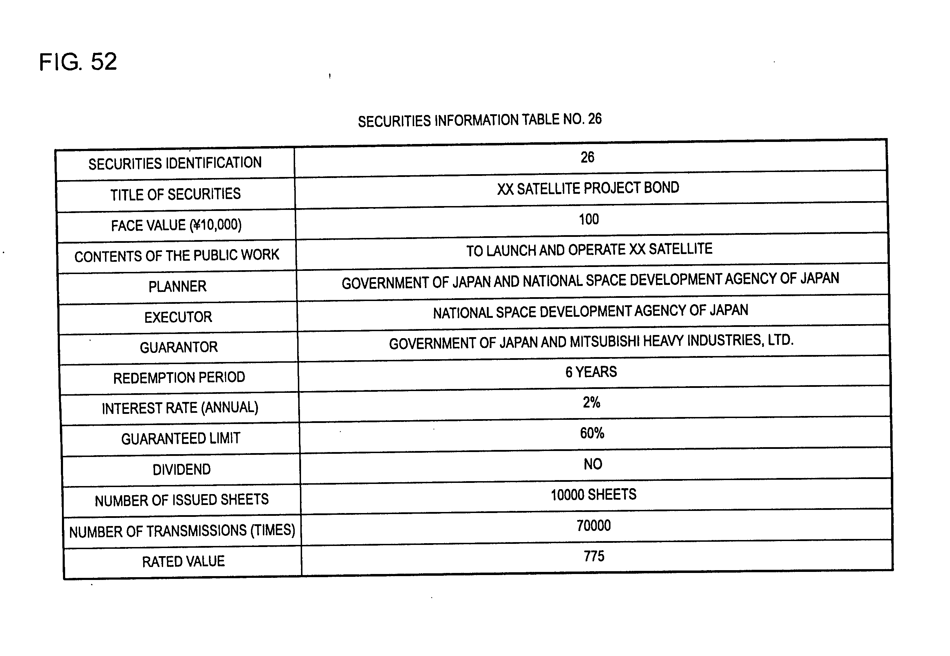

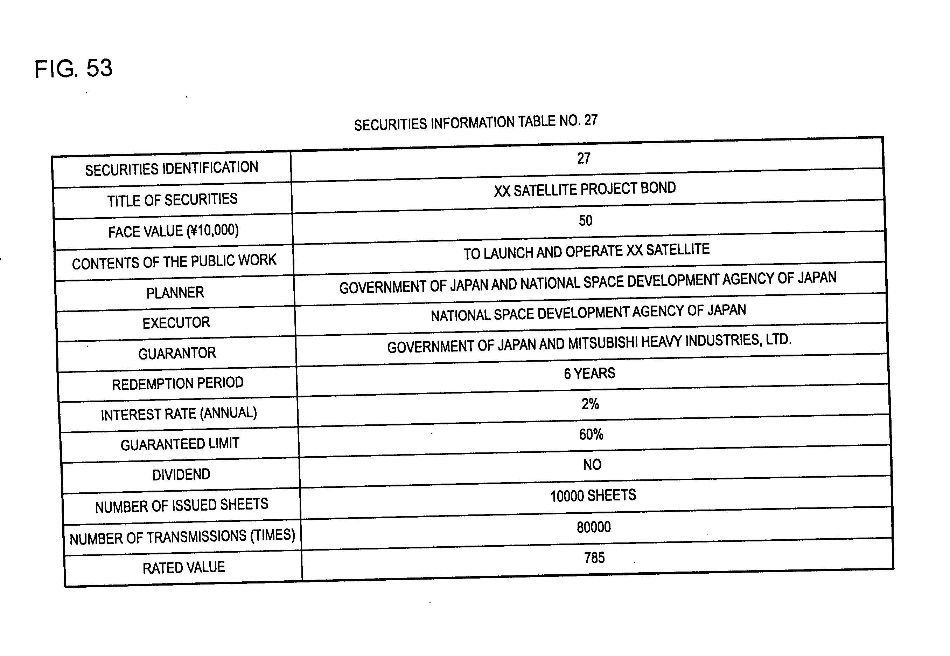

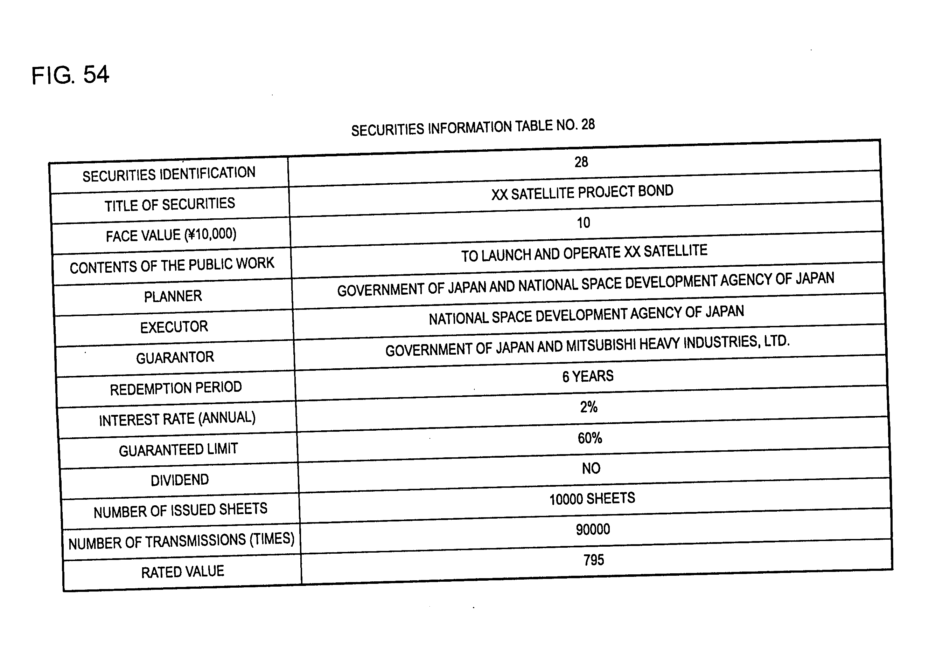

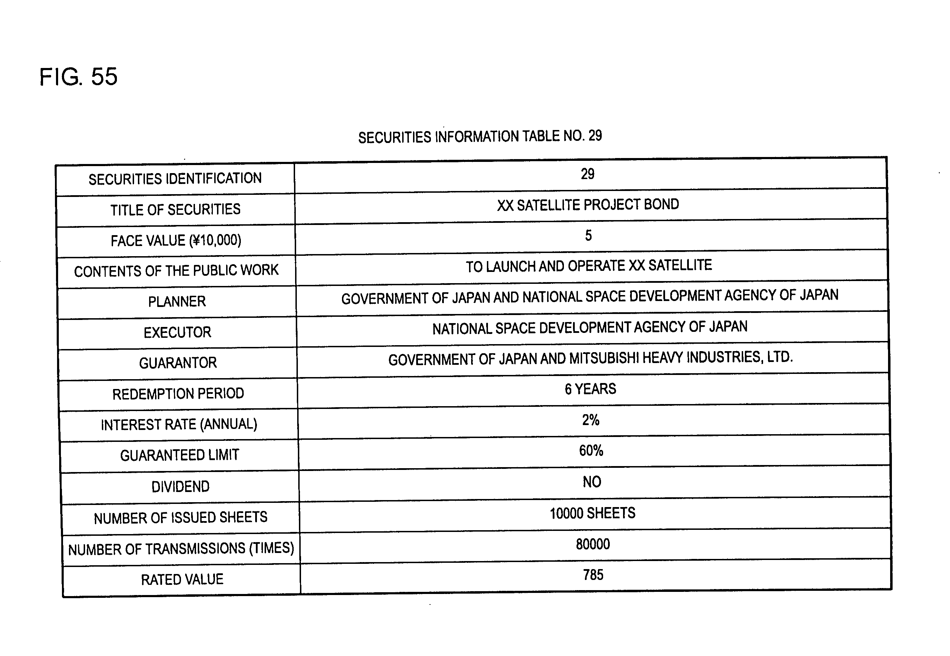

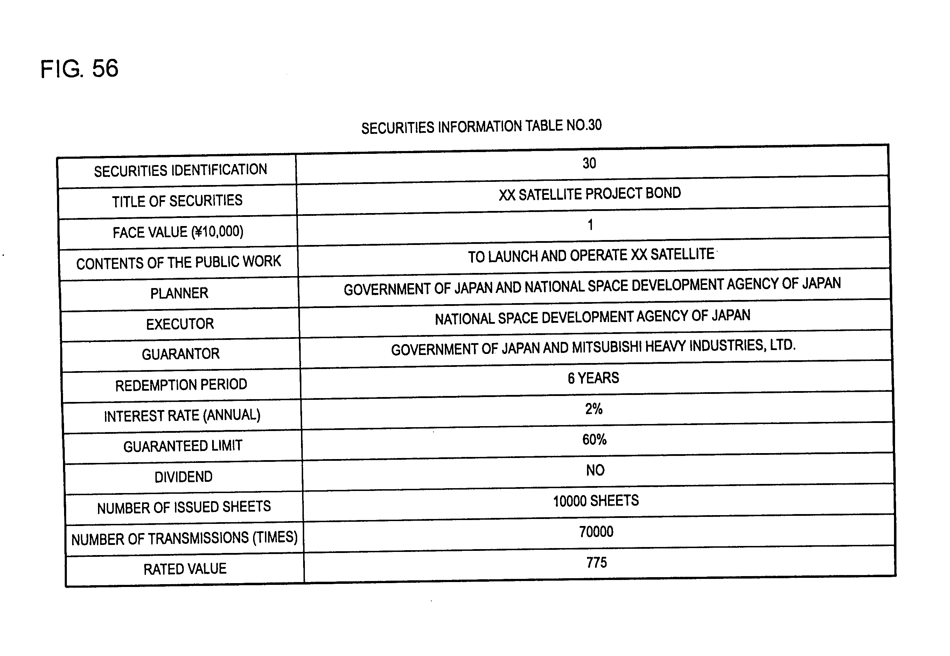

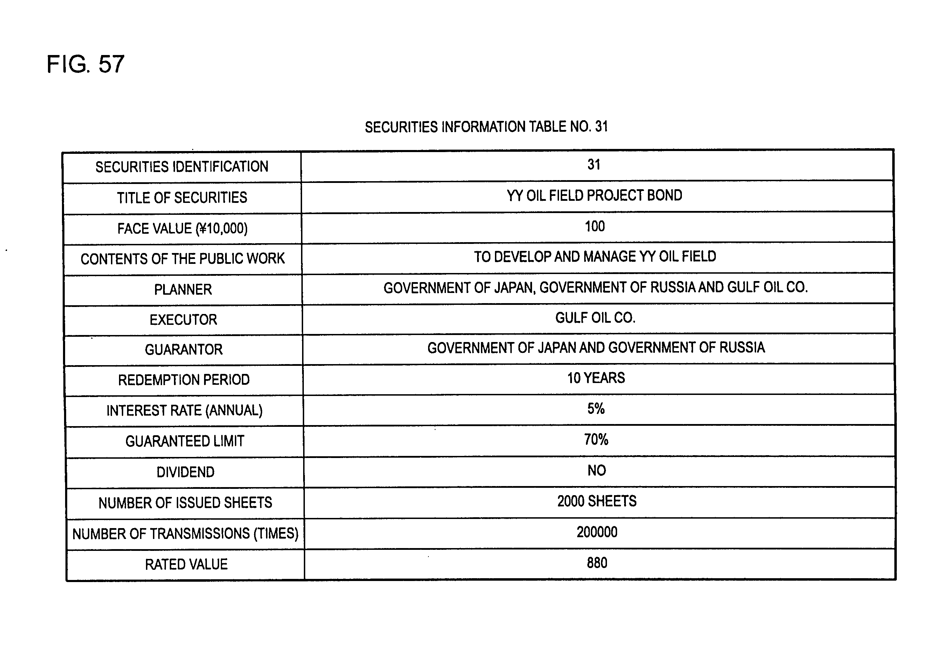

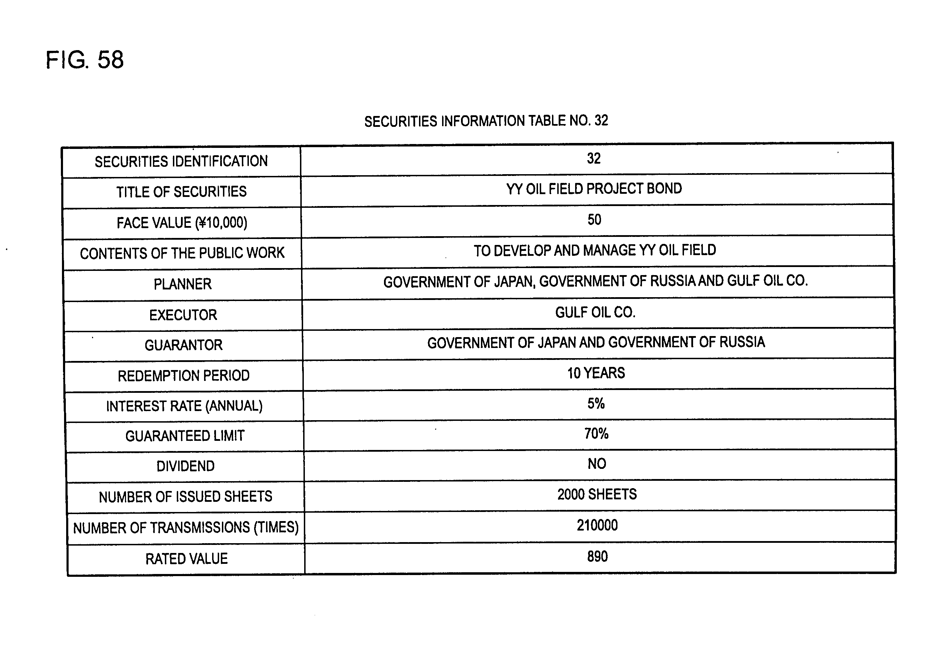

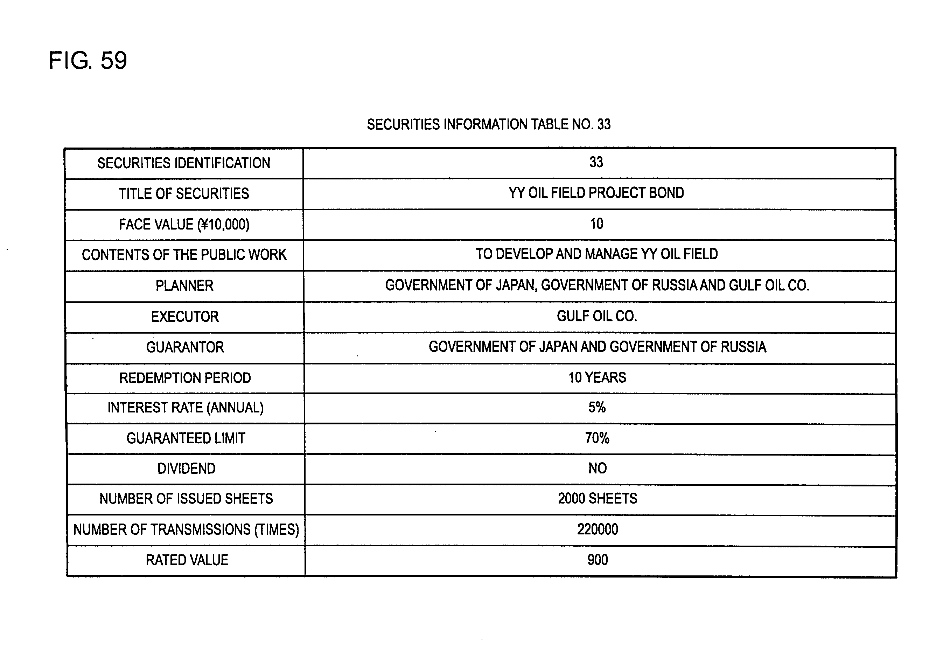

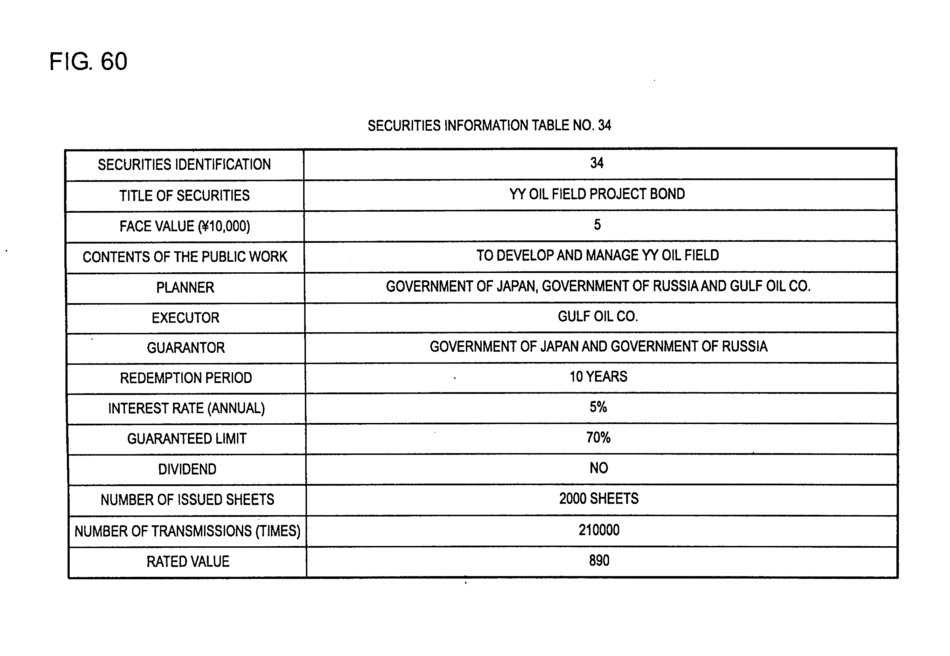

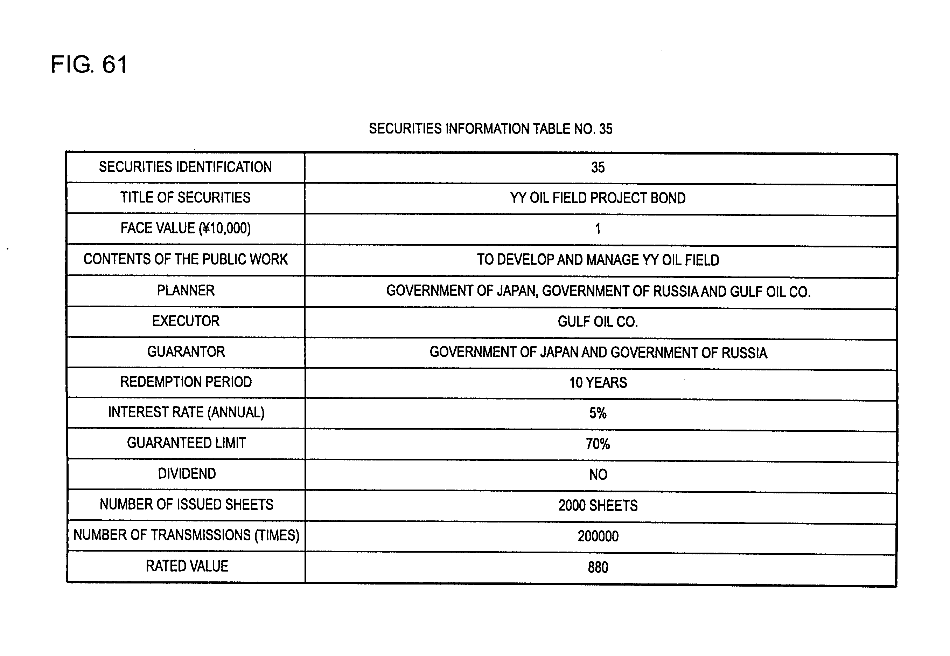

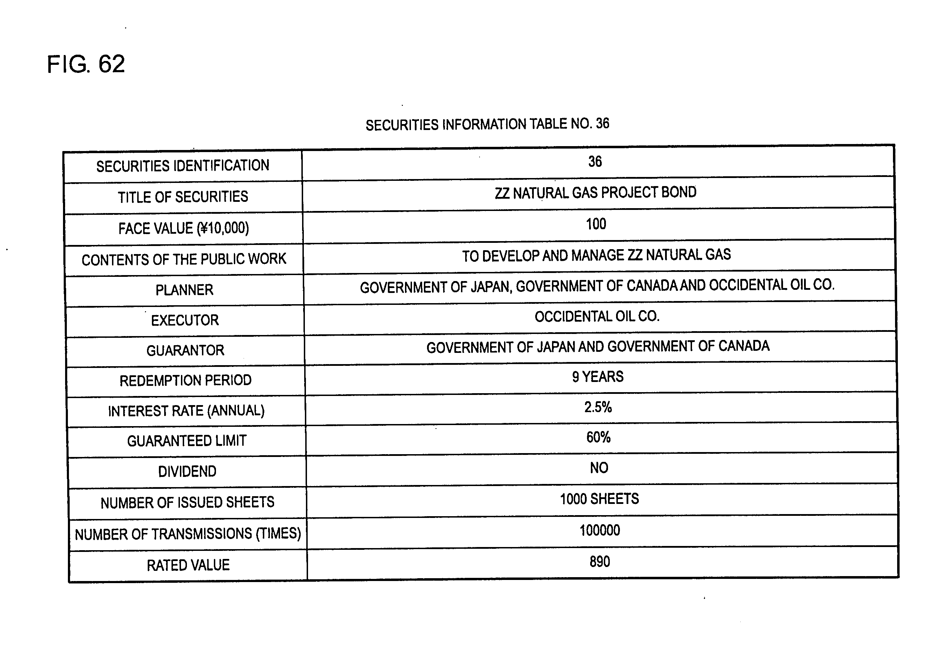

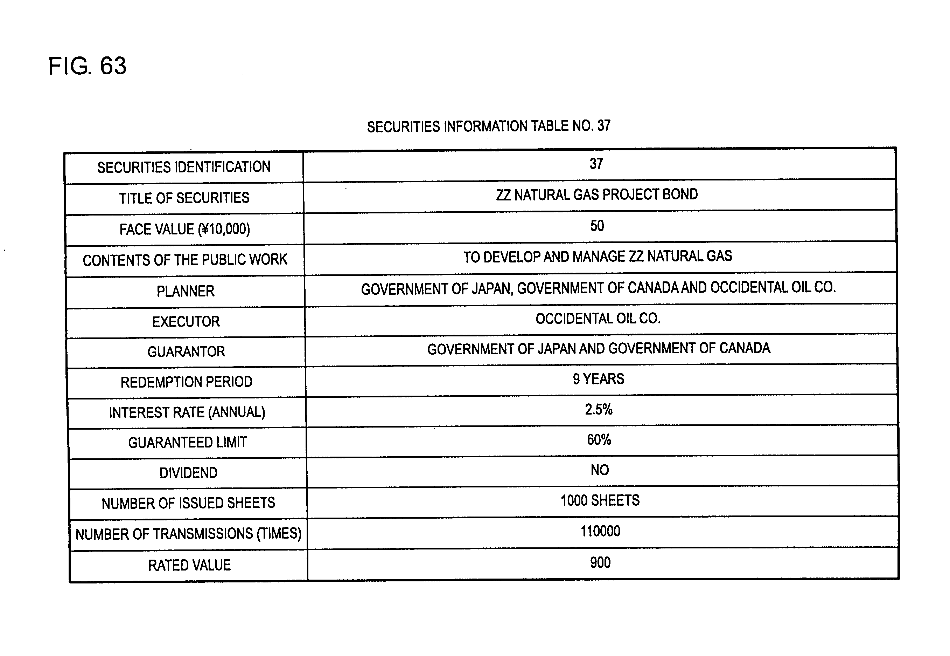

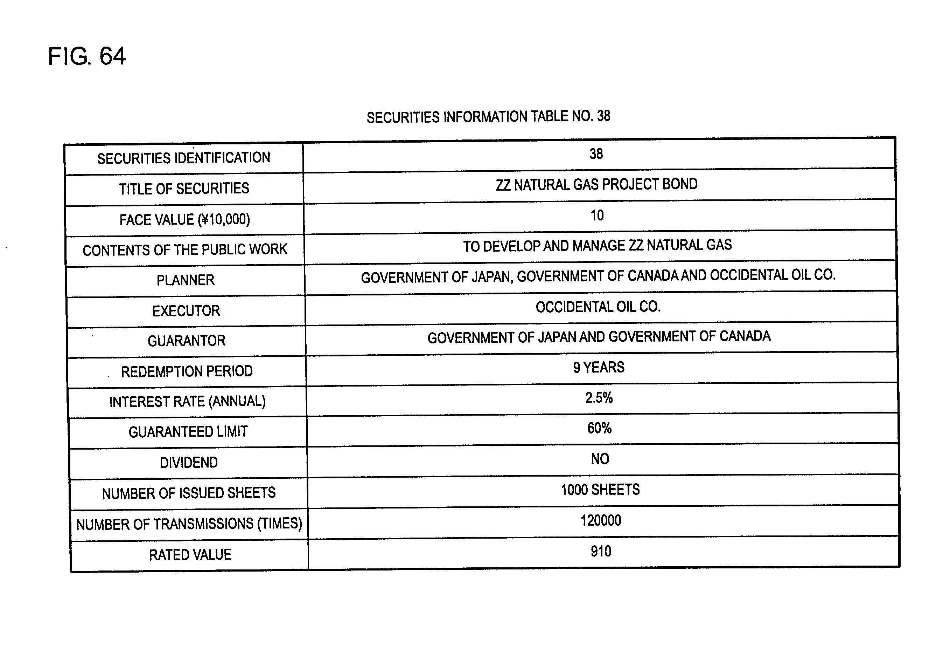

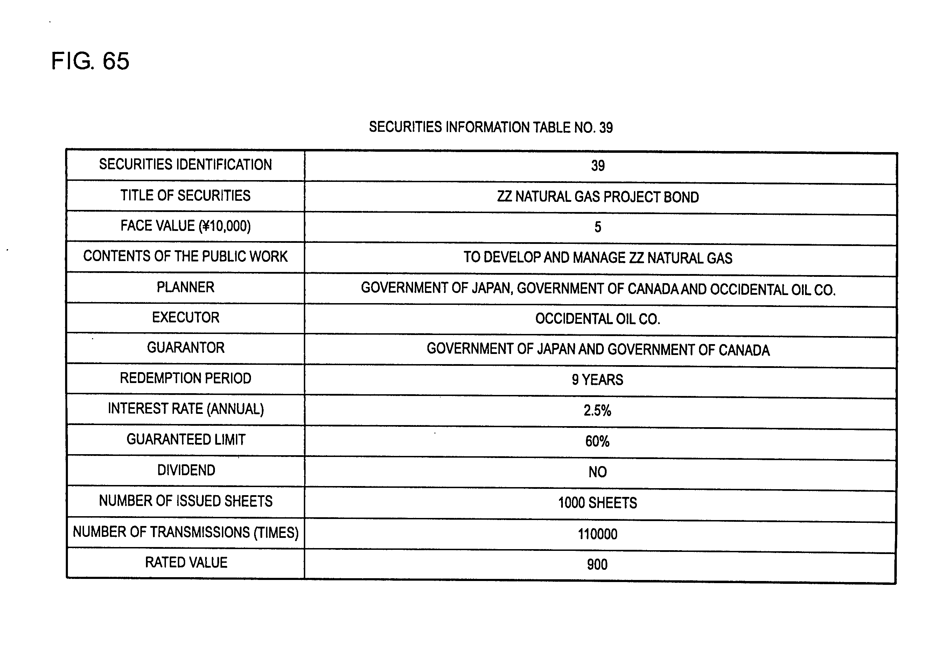

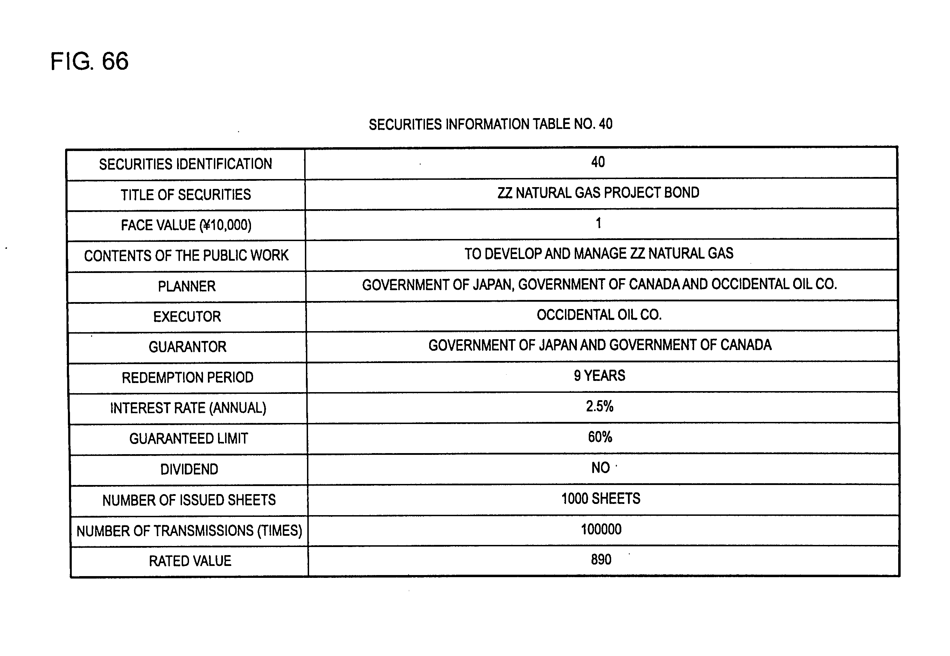

The security information table here means a table on which security elements are recorded for each security, examples of which are shown on Fig. 27 through Fig. 66.

The security elements are data that constitute a security such as Title of Security, Face Value (¥10,000), Contents of Public Work,Planner,Executor,Guarantor,Redemption Limit, Interest Rate (annual), Guaranteed Limit, Dividend, Number of Issues, Number of Transmissions, etc., shown in Fig. 27 through Fig. 66.

Security rating value table storing module 172a is software that stores the security rating value table into hard disk 170a.

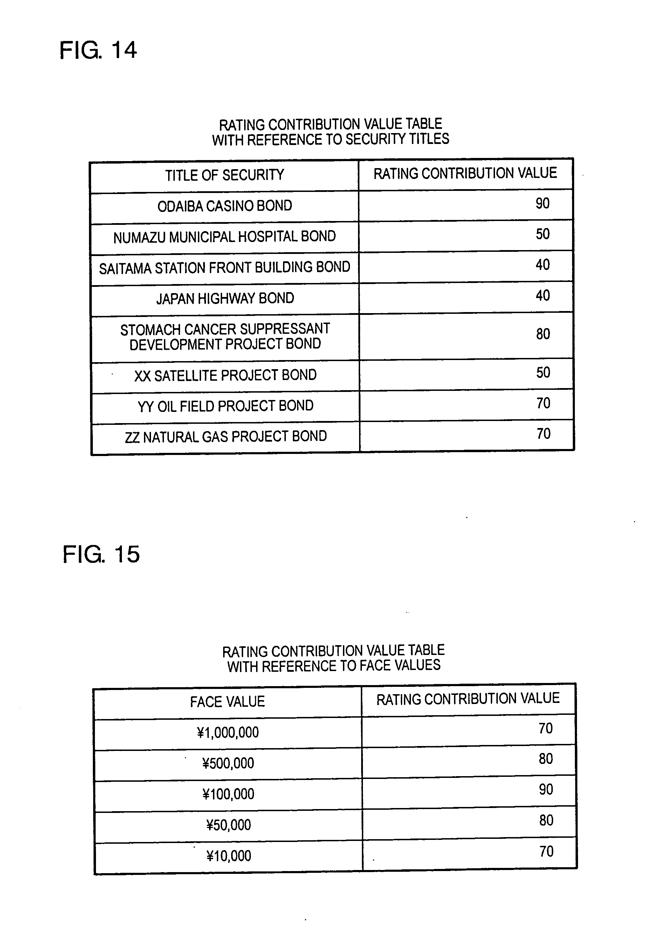

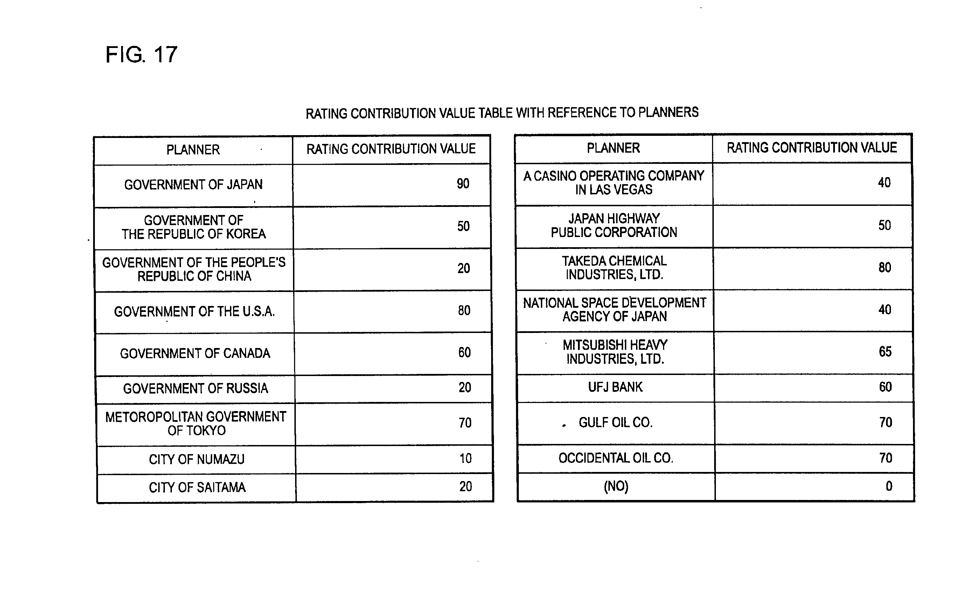

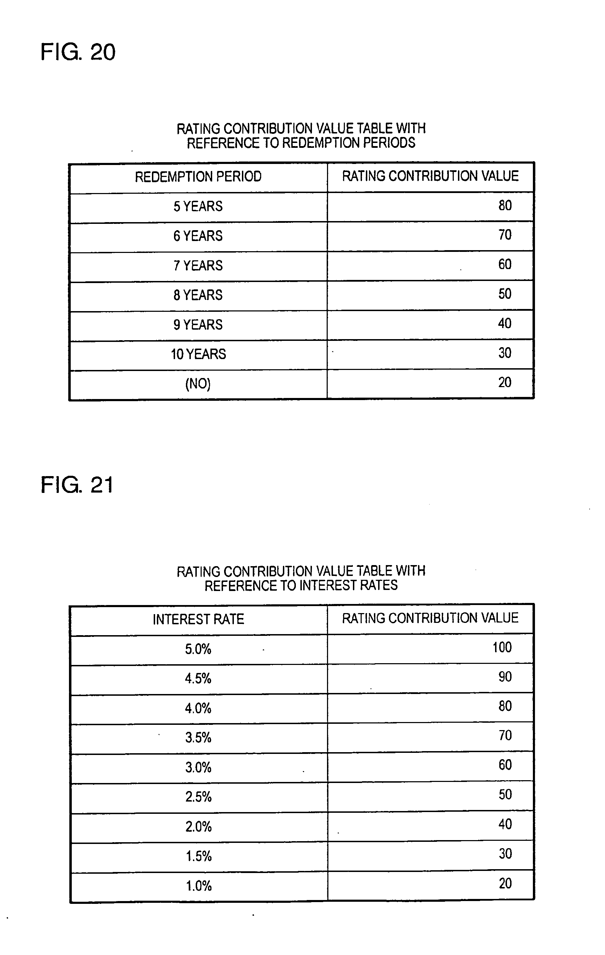

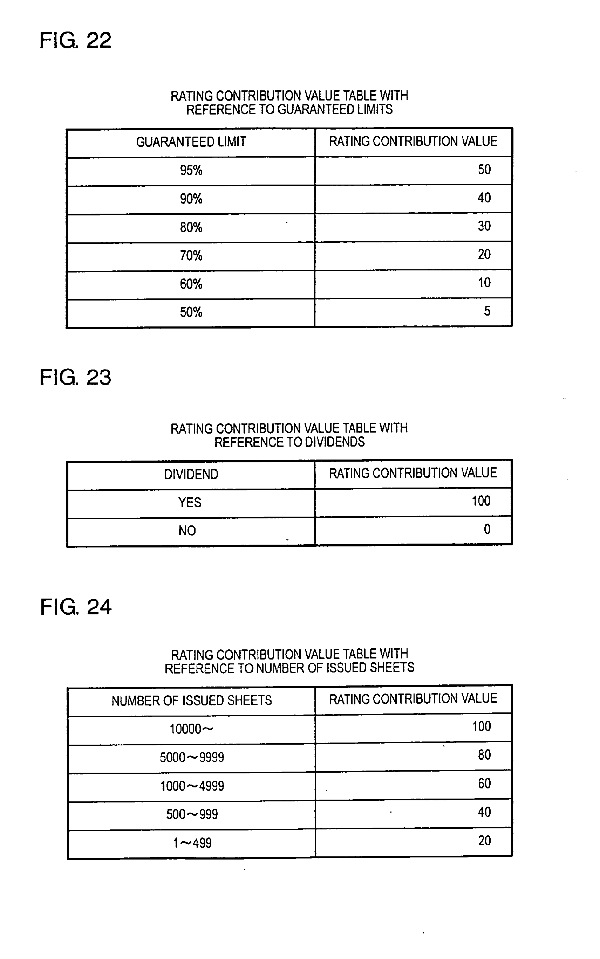

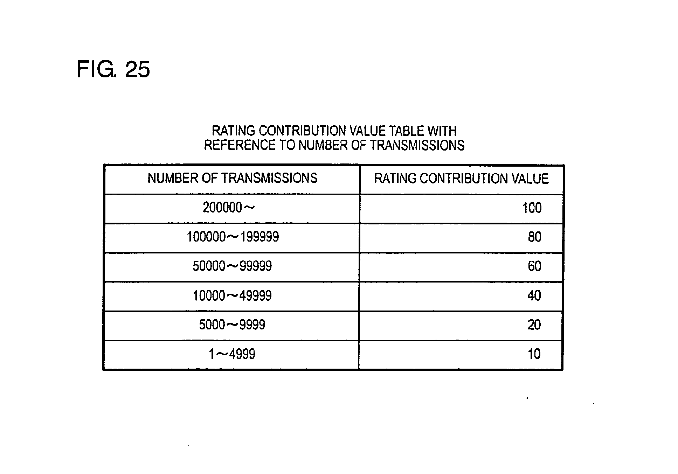

The rating contribution value table here means a table on which rating contribution values are recorded for each security element, examples of which are shown on Fig. 14 through Fig. 25.

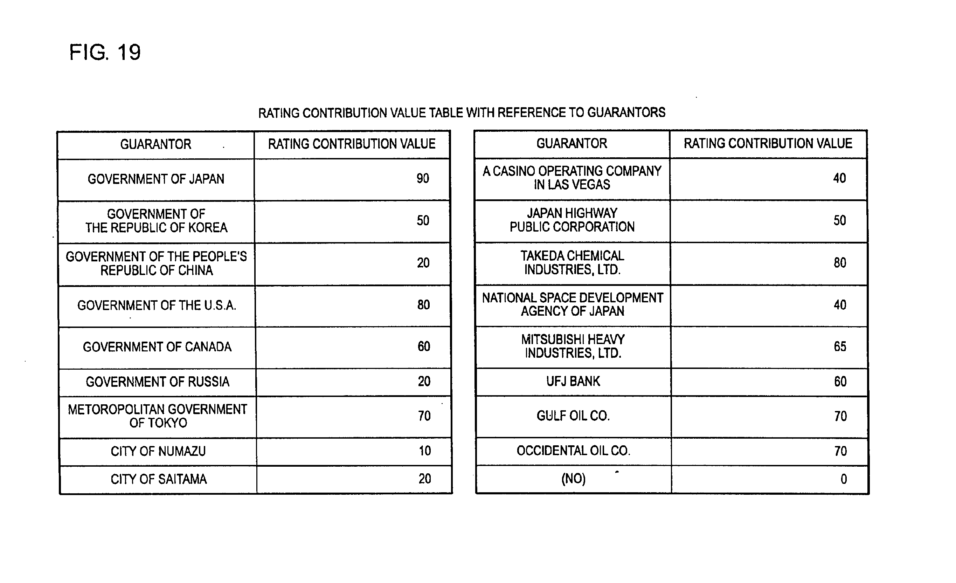

The rating contribution value here means a contribution value that a security element provides for rating of a security; for example, if a security element, "Guarantor," happens to be "the Government of Japan," said security element called "the Government of Japan" provides a rating contribution value of 90 (see Fig. 19).

There are cases where more than two national or local governments or public institutions, more than two private enterprises, one national or local government or public institution and one private enterprise, one national or local government or public institution and more than two private enterprises, two or more national or local governments or public institutions and a private enterprise, or more than two national or local governments or public institutions and more than two private enterprises become planners or executioners of a public work to which funds acquired by securities are applied or guarantors of a bond.

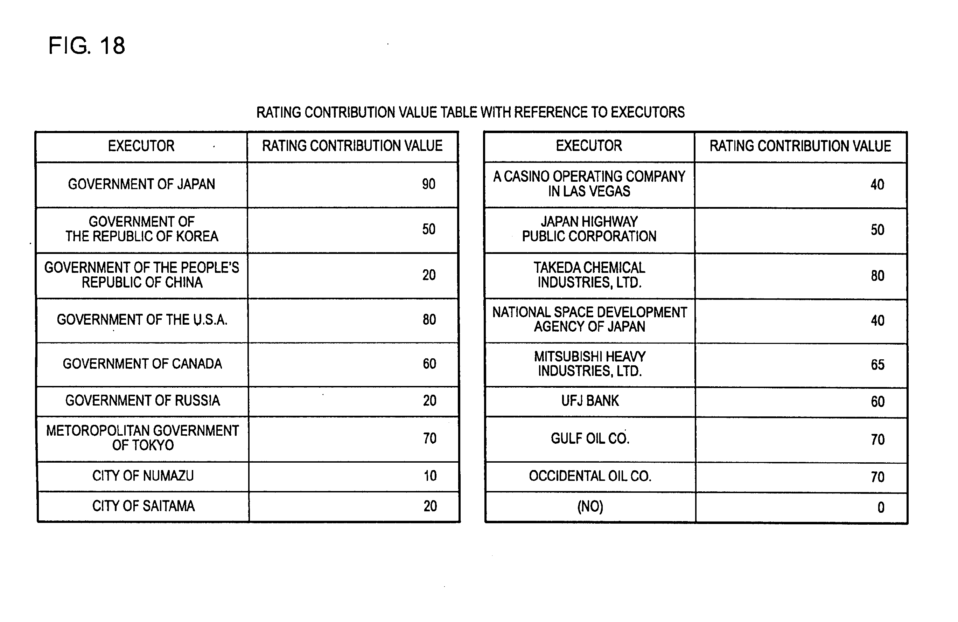

The rating contribution value of a security element Planner, a security element Executioner and a security element guarantor in such cases will be the sum of rating contribution values the national or local government(s) or private enterprise (s) provide. In other words, if security element Executioners are "Metropolitan Government of Tokyo and a casino operating company in Las Vegas, " this security element called "Metropolitan Government of Tokyo and a casino operating company in Las Vegas" provides a rating contribution value of 70 + 40 = 110 (Fig. 18).

Rating value calculating module 173a is software that calculates the sum of rating contribution values for each security information table using the rating contribution value table, which records contribution values for rating of a security belonging to security elements, and records the calculated sum of the rating contribution values as a rating value on the security information table.

The rating value here means the rating of a security expressed with a numerical value. As mentioned above, the sum of rating contribution values for each security information table is the rating value.

For example, in case of Security Information Table No. 1 ("Odaiba Casino Bond" with a face value of ¥1, 000, 000) shown in Fig. 27, "Title of Securities" = 90, "Face Value (¥10 , 000) " = 70, "Contents of the Public Work" = 90, "Planner" = 90, "Executor" = 110, "Guarantor" = 80, "Redemption Period" = 30, "Interest rate (annual)" = 60, "Guaranteed Limit" = 20, "Dividend" = 0, "Number of Issued Sheets" = 100, and "Number of Transmissions = 100, so that the rating value becomes 90 + 70 + 90 + 90 + 110 + 80 + 30 + 60 + 20 + 0 + 100 + 100 = 840.

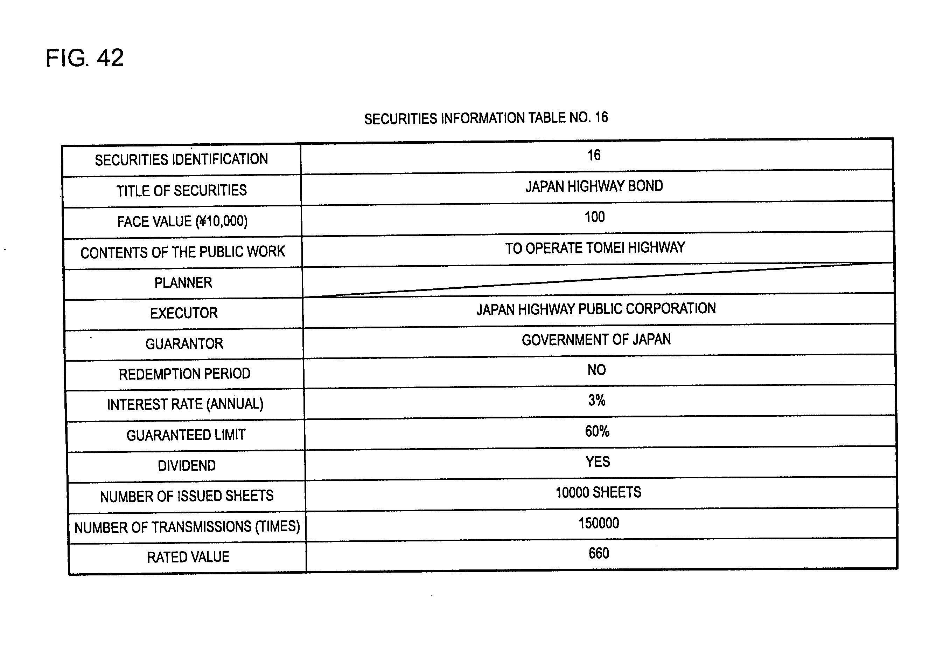

Also, for example, in case of Security Information Table No. 16 ( "Japan Highway Bond" with a face value of 1,000,000) shown in Fig. 42, "Title of Securities" = 40, "Face Value (¥10,000) " = 70, "Contents of the Public Work" = 40, "Planner" = 0, "Executor" = 50, "Guarantor" = 90, "Redemption Period" = 20, "Interest rate (annual)" = 60, "Guaranteed Limit" = 10, "Dividend" = 100, "Number of Issued Sheets" = 100, and "Number of Transmissions = 80, so that the rating value becomes 40 + 70 + 40 + 0 + 50 + 90 + 20 + 60 + 10 + 100 + 100 + 80 = 660.

As can be seen from the above, since Security Information Table No.1 1 ("Odaiba Casino Bond"with a face value of ¥1,000,000) shown in Fig. 27 and Security Information Table No. 16 ("Japan Highway Bond" with a face value of ¥1,000,000) shown in Fig. 42 have identical security elements in terms of the face value (¥1,000,000) and the interest rate (annual), they get the same rating contribution values, e.g., "Face Value (¥1,000,000)" =70 and "Interest Rate (annual)" = 60, for both the face value (¥1,000,000) and the interest rate (annual) .

However, the two securities have differences in security elementsotherthanthefacevalue (¥1,000,000) and the interest rate (annual). Consequently, the rating values of the two securities are different (as noted above, the rating value of "Odaiba CasinoBond" with a face value of ¥1, 000, 000 (Security Information Table No. 1 shown in Fig. 27) is 840, while the rating value of "Japan Highway Public Corporation" with a face value of ¥1,000,000 (Security Information Table No. 16 shown in Fig. 42) is 660).

Security information table transmitting module 174a is software for transmitting security information tables shown in Fig. 27 through Fig. 66 to security rating client 200a when it receives a security information table transmission request transmitted by security rating client 200a shown in Fig. 1.

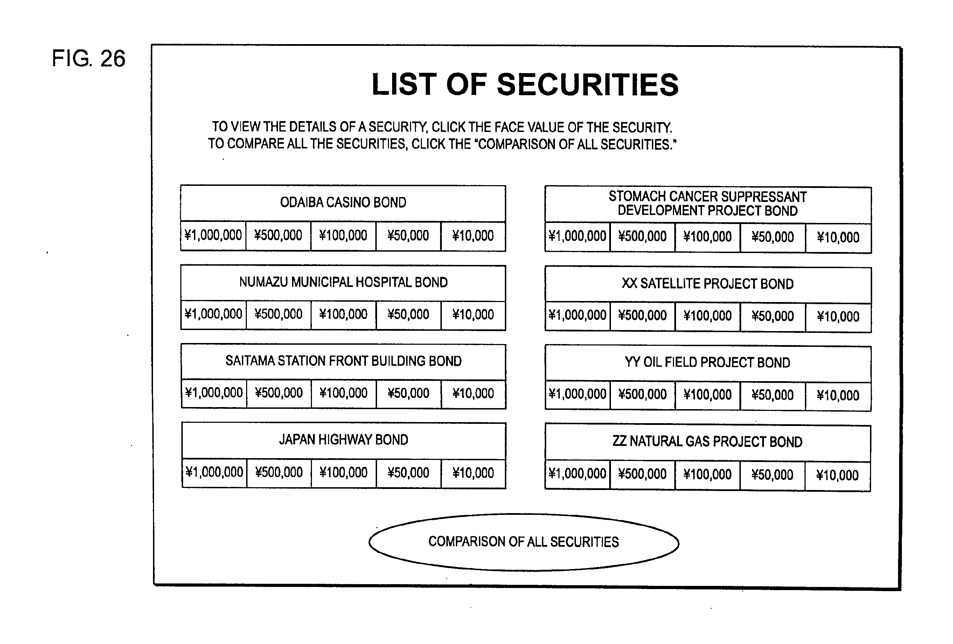

The security information table transmission request is transmitted by security rating client 200a to security rating server 100a when a user clicks the face value of a specific security with a mouse on the front page shown in Fig. 26, which has been transmitted by security rating server 100a shown in Fig. 1 to securing rating client 200a.

The security information table transmission request is for security rating client 200a to request security rating server 100a to transmit the information related to the securities with the clicked face value.

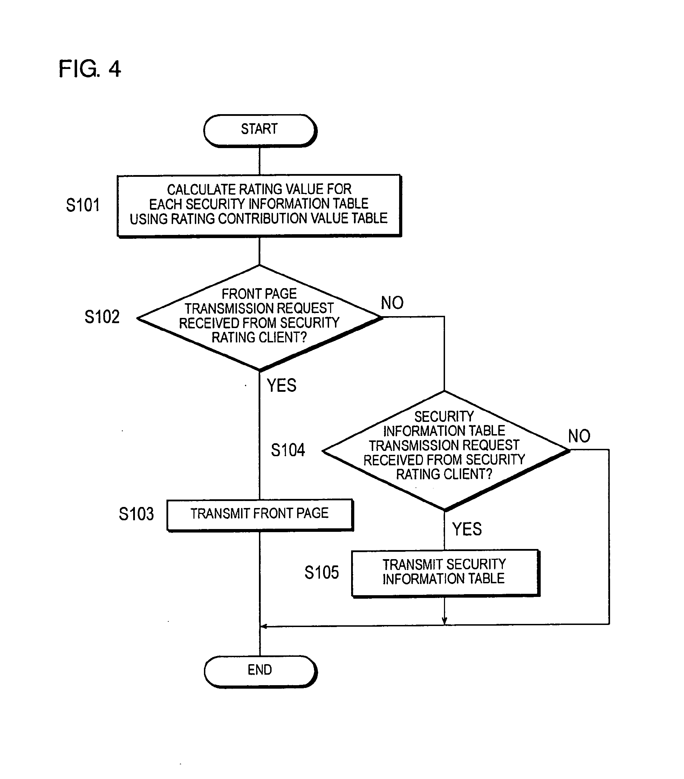

Security rating server 100a performs the process shown in Fig. 4 by means of executing the execution program consisting of the abovementioned modules on CPU 110a shown in Fig. 2. The process to be performed by security rating server 100a will be described below with reference to Fig. 4.

Fig. 4 is a flowchart used for describing the process performed by security rating server 100a.

Security rating server 100a calculates the sum of rating contribution values on each security information table using the rating contribution table in step S101, and records the sum of the calculated rating contributions as a rating value on the security information table.

Security rating server 100a determines whether it received a front page transmission request from security rating client 200a in step S102, and transmits the front page shown in Fig. 26 to security rating client 200a in step S103 if there was a front page transmission request from security rating client 200a.

Next, security rating server 100a determines whether it received a security information table transmission request from security rating client 200a in step S104, and transmits the security information table to security rating client 200a in step S105 if there was a security information table transmission request from security rating client 200a.

Al though a note book personal computer ("PC") is indicated as security rating client 200a as shown in Fig. 1 in the security rating system according to the first embodiment of the present invention, the security rating client of the invention is not limited to a notebook PC.

The security rating client of the present invention can be any type of client computers such as desktop PC, notebook PC, cellular telephones and PDA, as long as they can transmit security information table transmission requests to a security rating server and receive security information tables from the security rating server.

As described in the above, all securities will be provided the same rating contribution value if they share the same security element, e.g., "Guarantor" being "the Government of Japan" in the security rating system according to the first embodiment.

Consequently, the security rating system according to the first embodiment of the present invention provides a means of objectively conducting the process of security rating.

### (Second embodiment)

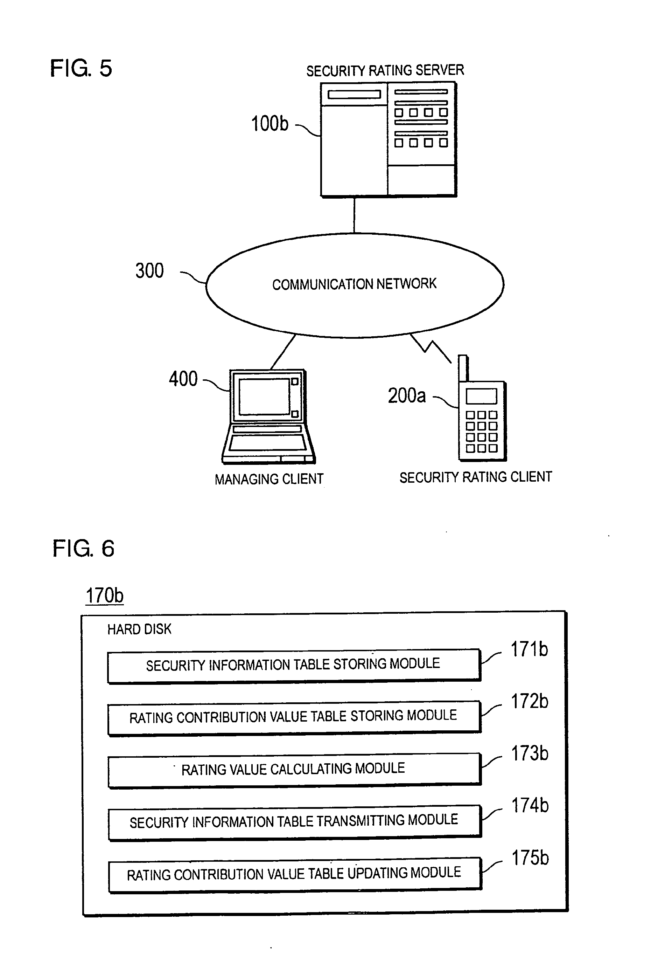

Fig. 5 is diagram for describing a security rating system according to second embodiment of the present invention.

As shown in Fig. 5, the security rating system according to the second embodiment of the present invention has a security rating server 100b, a communication network 300 connected to this security rating server 100b, a security rating client 200a, and a manager 400 connected to this communication network 300.

The security rating system according to the second embodiment is different from the security rating system according to the first embodiment described above in that it has security rating server 100b instead of security rating server 100a used in the latter.

Also, the security rating system according to the second embodiment is different from the security rating system according to the first embodiment described above in that it has manager 400 while the latter has no manager 400.

The security rating system according to the second embodiment has the same constitution as the security rating system according to the first embodiment except the fact that it has security rating server 100b and manager 400.

Security rating server 100b shown in Fig. 5 has the constitution shown in Fig. 2 similar to security rating server 100a shown in Fig. 1.

However, the execution program being executed by a CPU (not shown) of security rating server 100b is different from the execution program executed by CPU 110a of security rating server 100a shown in Fig. 1 in that it has a rating contribution value table updating module 175b as shown in Fig. 6.

A security information table storing module 171b, arating contribution value table storing module 172b, a rating value calculation module 173b, and a security information table transmitting module 174b in the execution program to be executed by the CPU (not shown) of security rating server 100b shown in Fig. 5 are identical software to security information table storing module 171a, rating contribution value table storing module 172a, rating value calculation module 173a, andsecurity information table transmitting module 174a in the execution program to be executed by CPU 110a of security rating server 100a shown in Fig. 1 respectively.

Rating contribution value table updating module 175b in the execution program to be executed by the CPU (not shown) of security rating server 100b in Fig. 5 updates rating contribution values recorded on the rating contribution value tables shown in Fig. 14 through Fig. 25 when rating contribution value table update requests are received from manager 400 shown in Fig. 5.

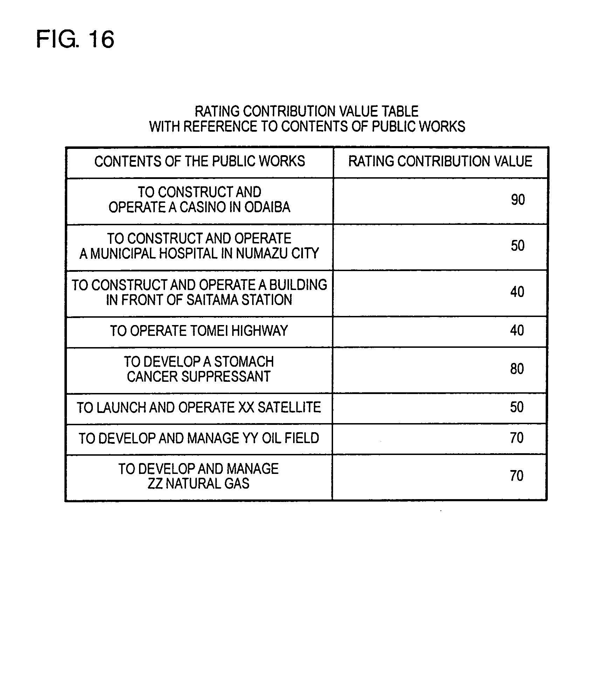

The manager is a person who manages the rating contribution values recorded on the rating contribution value table. Therefore, the manager updates the rating contribution value for "constructing and operating a casino in Odaiba" in the rating contribution table related to the contents of the public work shown in Fig. 16 from 90 to 100, when the popularity of the public work concerning its contents of "constructing and operating a casino in Odaiba" among the citizens of Japan or the metropolitan Tokyo district increases.

Also, the manger updates the rating contribution value of the "United States" in the rating contribution value table concerning the guarantor shown in Fig. 19 from 80 to 60 when the business trend deteriorates in the United States.

Therefore, a rating contribution value table update request transmitted by manager 400 to security rating server 100b shown in Fig. 5 is for manager 400 to request securities rating server 100b to update the rating contribution value table.

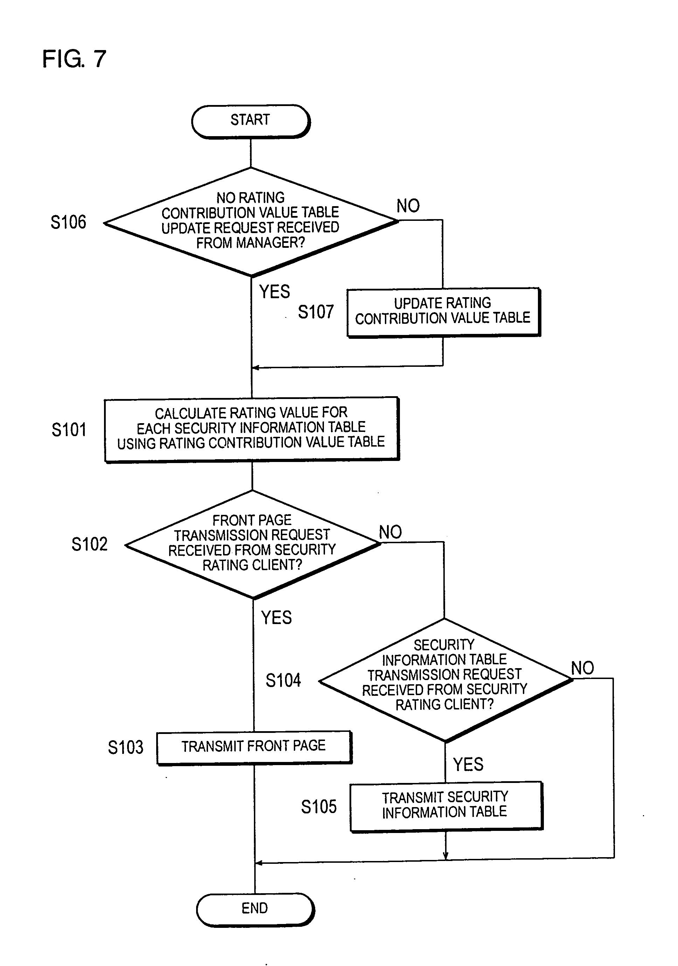

Security rating server 100b, which executes the execution program containing the rating contribution value table updating module 175b by means of CPU, performs the process shown in Fig. 7.

Of the processes performed by security rating server 100b shown in Fig. 7, steps S101 through S105 are identical respectively to steps S101 through 105 performed by security rating server 100a in the first embodiment described in the above.

In the second embodiment, security rating server 100b first determines in step S106 whether a rating contribution value table update request has been received from manager 400, and updates the rating contribution values to be recorded on the rating contribution table if a rating contribution value table update request has been received.

Security rating server 100b executes step S101 after step S106 and executes steps S102 through S105 similar to the first embodiment.

Although a cellular telephone is indicated as security rating client 200a as shown in Fig. 5 in the security rating system according to the second embodiment of the present invention, the security rating client of the invention is not limited to a cellular telephone.

The security rating client of the present invention can be any type of client computers such as desktop PC, notebook PC, cellular telephones and PDA, as long as they can transmit security information table transmission requests to a security rating server and receive security information tables from the security rating server.

Although a notebook PC is indicated as manager 400 as shown in Fig. 5 in the security rating system according to the second embodiment of the present invention, the security rating client of the invention is not limited to a notebook PC.

Therefore, the manager of the present invention include various types of client computers such as desktop PC, notebook PC, cellular telephones, and PDA that are capable of transmitting rating contribution value table update requests to the security rating server.

As mentioned above, the manager can update the rating contribution value table using PC, PDA and the like in the security rating system according to the second embodiment of the present invention.

Consequently,international situations, business trends and popularity of the project among residents can be reflected upon the rating contribution values of security elements in the security rating system according to the second embodiment of the present invention.

It is also possible in the security rating system according to the second embodiment to arrange a means of verifying the party trying to have an access to the rating contribution table so that only the manager can have an access to the rating contribution tables shown in Fig. 14 through Fig. 25.

Consequently, such a verifying check will make the rating contribution value tables shown in Fig. 14 through Fig. 25 inaccessible for viewing except by the manager, although the security information tables Fig. 27 through Fig. 66 are open for viewing by all who are concerned. Thus, security rating client 200a canview the rating values of securities if security rating server 100b has a means of verifying, but not the rating contribution value belonging to each security element.

### (Third embodiment)

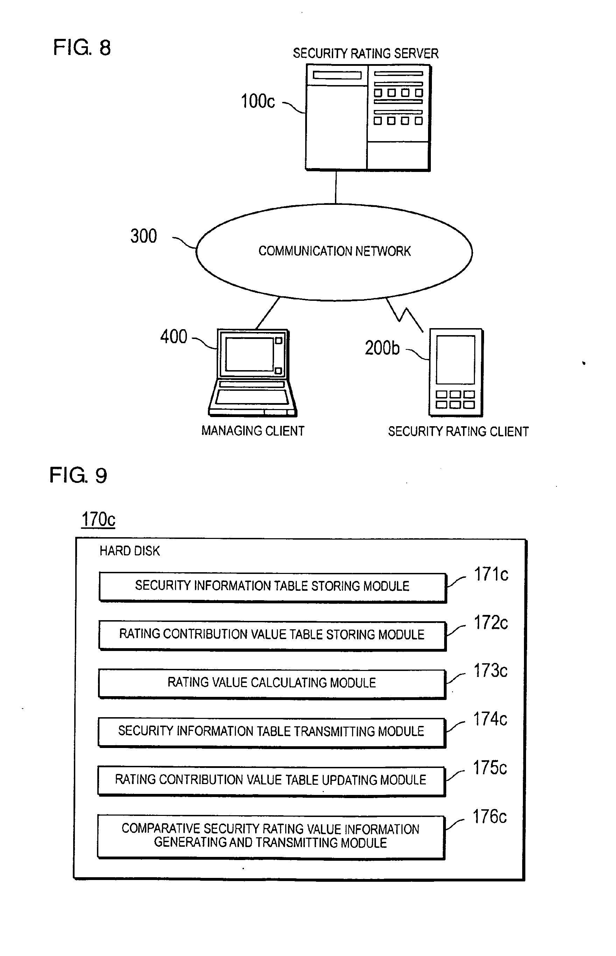

Fig. 8 is a diagram showing the third embodiment of the present invention.

As shown in Fig. 8, the security rating system according to the third embodiment of the present invention has a security rating server 100c, a communication network 300 connected to this security rating server 100c, a security rating client 200b, and a manager 400 connected to this communication network 300.

The security rating system according to the third embodiment is different from the security rating system according to the second embodiment described above in that it has a security rating server 100c instead of security rating server 100b used in the latter.

Also, the security rating system according to the third embodiment is different from the security rating system according to the second embodiment in that it has security rating client 200b while the latter has no security rating client 200b.

The security rating system according to the third embodiment has the same constitution as the security rating system according to the second embodiment except the fact that it has security rating server 100c and security rating client 200b.

Security rating server 100c shown in Fig. 8 has the constitution shown in Fig. 2 similar to security rating server 100b shown in Fig. 5.

However, the execution program being executed by a CPU (not shown) of security rating server 100c is different from the execution program executed by CPU (not shown) of security rating server 100b shown in Fig. 5 in that it has a comparative security rating value information generating and transmitting module 176c as shown in Fig. 9.

A security information table storing module 171c, arating contribution value table storing module 172c, a rating value calculation module 173c, a security information table transmitting module 174c, and a rating contribution value table updating module 175c in the execution program to be executed by the CPU (not shown) of security rating server 100c shown in Fig. 8 are identical software to security information table storing module 171b, rating contribution value table storing module 172b, rating value calculation module 173b, security information table transmitting module 174b, and a rating contribution value table updating module 175b in the execution program to be executed by CPU (not shown) of security rating server 100b shown in Fig. 5 respectively.

Comparative security value information generating and transmitting module 176c in the execution program to be executed by the CPU (not shown) of security rating server 100c shown in Fig. 8 is software for generating comparative security rating value information upon receiving a comparative security rating value information transmission request from security rating client 200b shown in Fig. 8.

The comparative security rating value information transmission request is transmitted by security rating client 200b to security rating server 100c when a user clicks "Comparison of All Securities" with a mouse on the front page shown in Fig. 26, which has been transmitted by security rating server 100c shown in Fig. 8 to securing rating client 200b. The comparative security value information transmission request is for security rating client 200b to request security rating server 100c to transmit a comparative security rating value information.

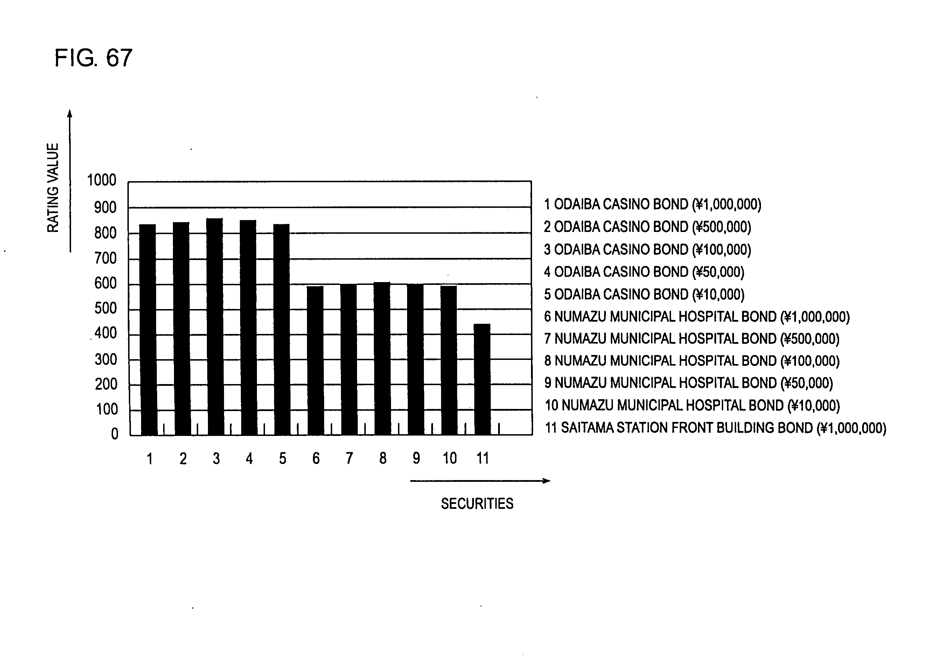

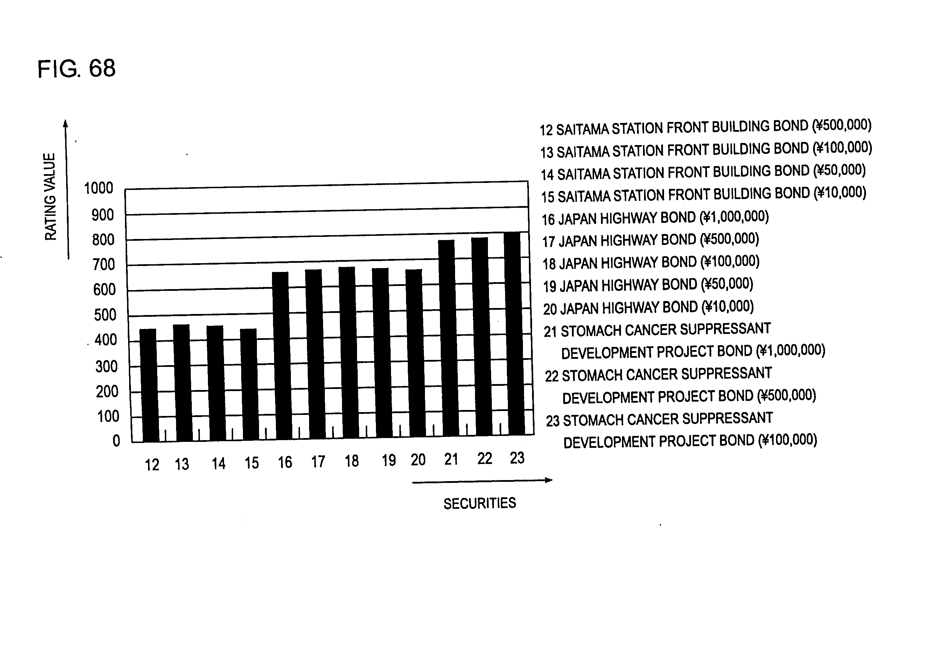

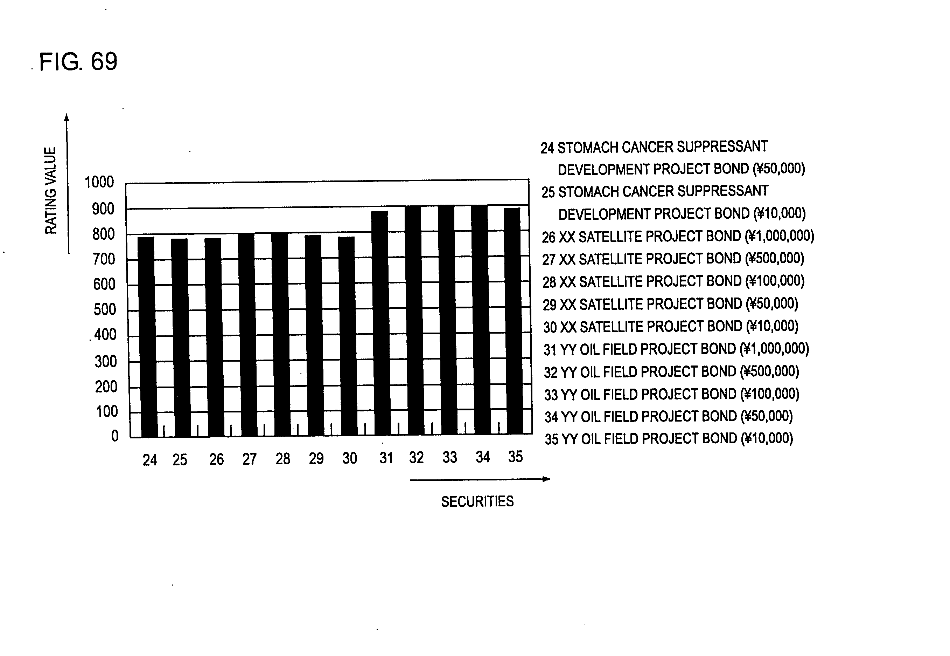

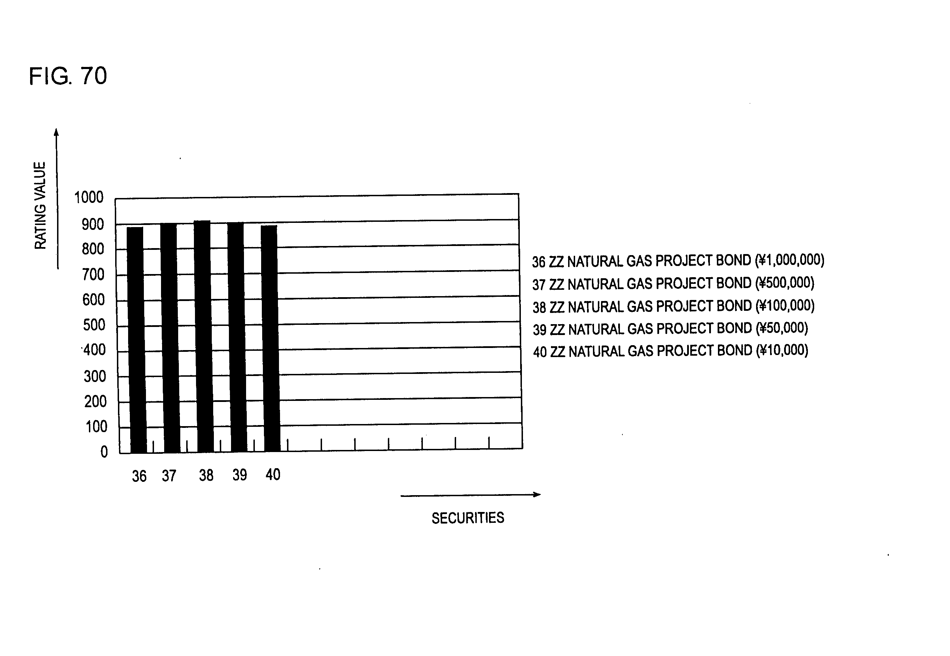

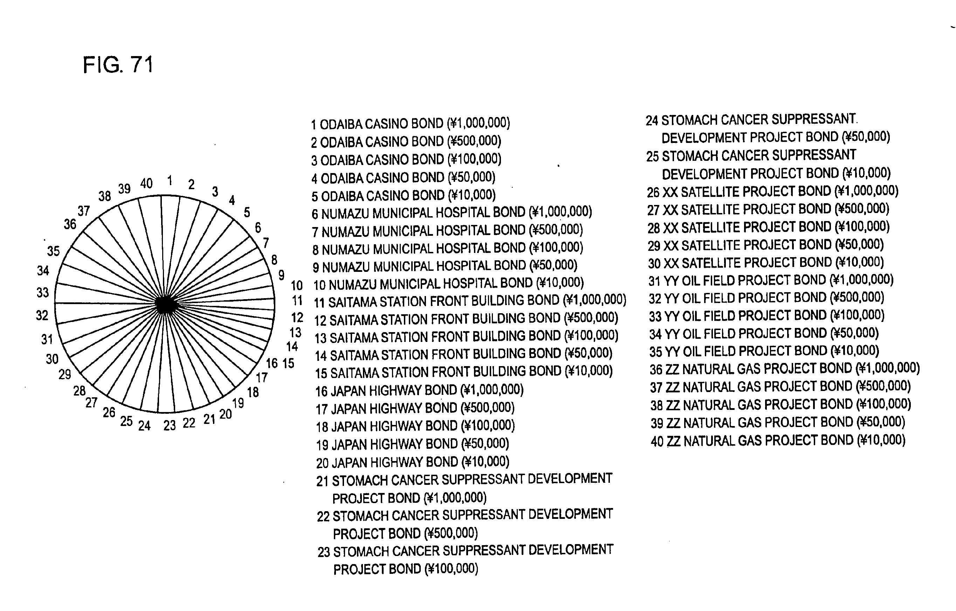

The comparative security rating value information is information for comparing rating values of securities recorded on security information tables Fig. 27 through Fig. 66 for a plurality of securities in such formats as bar graphs of rating value shown in Fig. 67 through Fig. 70 or pie charts of rating values shown in fig. 71.

Comparative security rating value information generating and transmitting module 176c transmits the generated comparative security rating value information to security rating client 200 b which transmitted the comparative security rating value information transmission request.

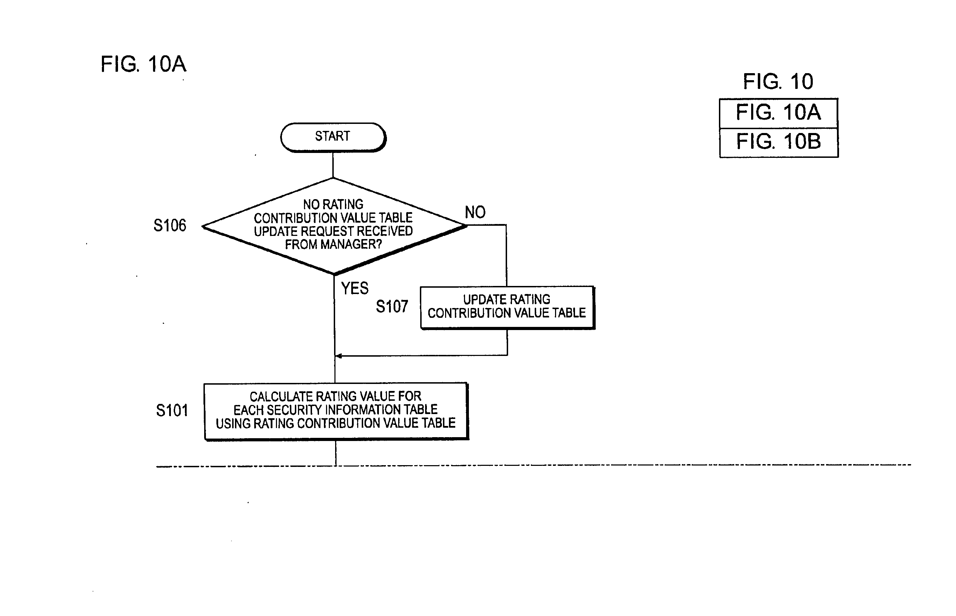

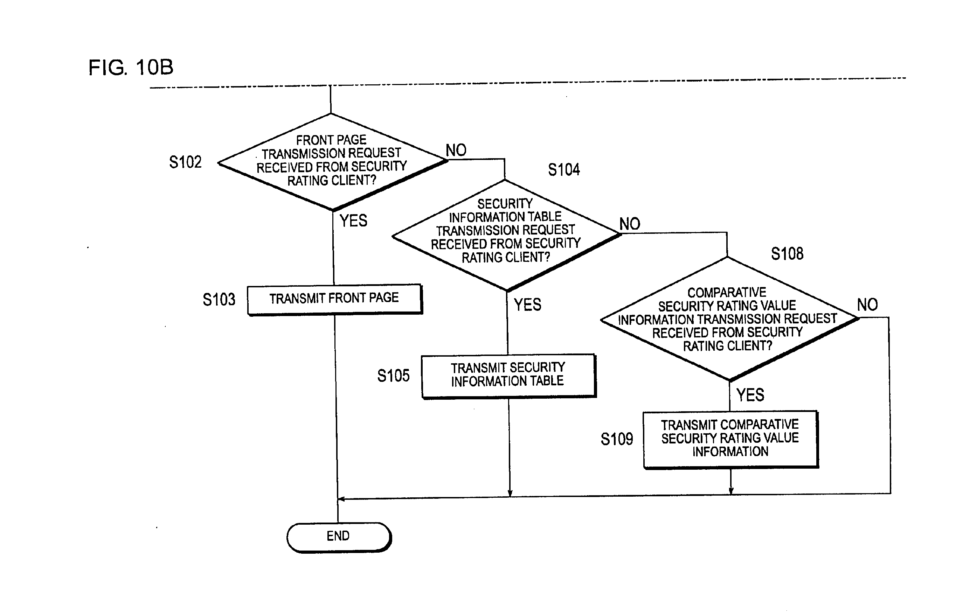

Security rating server 100c, which executes the execution program containing the comparative security rating value information generating and transmitting module 176c by means of CPU, performs the process shown in Fig. 10.

Of the processes performed by security rating server 100c shown in Fig. 8, steps S101 through S107 are identical respectively to steps S101 through 107 performed by security rating server 100b in the second embodiment described in the above.

In the third embodiment, security rating server 100c determines if a security information table transmission request is received from security rating client 200b in said step S104, and further determines if a comparative security rating value information transmission request is received from security rating client 200b in step S108 when no security information table transmission request is received from security rating client 200b.

Upon receiving a comparative security rating value information transmission request from security rating client 200b, security rating server 100c generates comparative security rating value information that compares rating values of securities recorded on security information tables for a plurality of securities and transmit it to security rating client 200b.

Although a PDA is indicated as security rating client 200b as shown in Fig. 8 in the security rating system according to the third embodiment of the present invention, the security rating client of the invention is not limited to a PDA.

The security rating client of the present invention can be any type of client computers such as desktop PC, notebook PC, cellular telephones and PDA, as long as they can transmit security information table transmission requests toa security rating server, receive security information tables from the security rating server, transmit comparative security rating value information transmission request to the security rating sever, and receive comparative security rating value information from the security rating server.

Although a cellular telephone is indicated as manager 400 as shown in Fig. 8 in the security rating system according to the third embodiment of the present invention, the manager of the invention is not limited to a cellular telephone.

Therefore, the manager of the present invention include various types of client computers such as desktop PC, notebook PC, cellular telephones, and PDA that are capable of transmitting rating contribution value table update requests to the security rating server.

As described above, investors can easily compare rating values of securities as said comparative security rating value information is transmitted from security rating server 100c to security rating client 200b by means of the security rating system according to the third embodiment of the present invention.

### (Fourth embodiment)

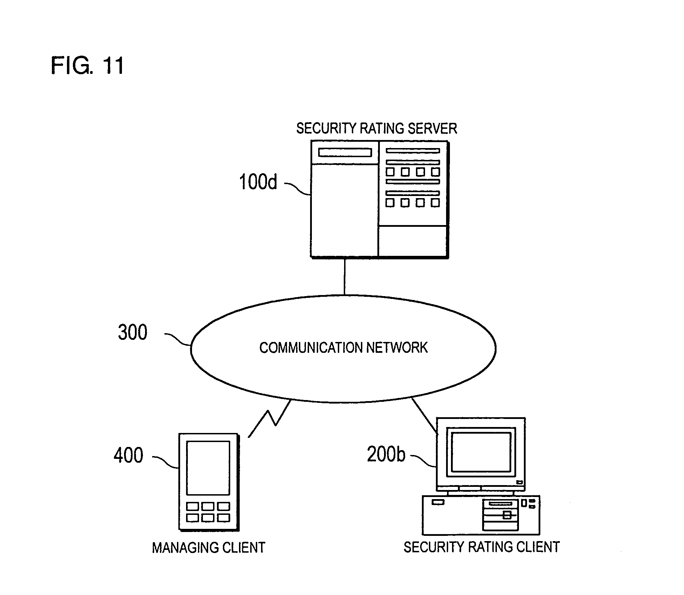

Fig. 11 is a diagram showing the fourth embodiment of the present invention.

As shown in Fig. 11, the security rating system according to the fourth embodiment of the present invent ion has a security rating server 100d, a communication network 300 connected to this security rating server 100d, a security rating client 200b, and a manager 400 connected to this communication network 300.

The security rating system according to the fourth embodiment is different from the security rating system according to the third embodiment described above in that it has security rating server 100d instead of security rating server 100c used in the latter.

The security rating system according to the fourth embodiment has the same constitution as the security rating system according to the third embodiment mentioned in the above except that it has security rating server 100d.

Security rating server 100d shown in Fig. 11 has the constitution shown in Fig. 2 similar to security rating server 100c shown in Fig. 8.

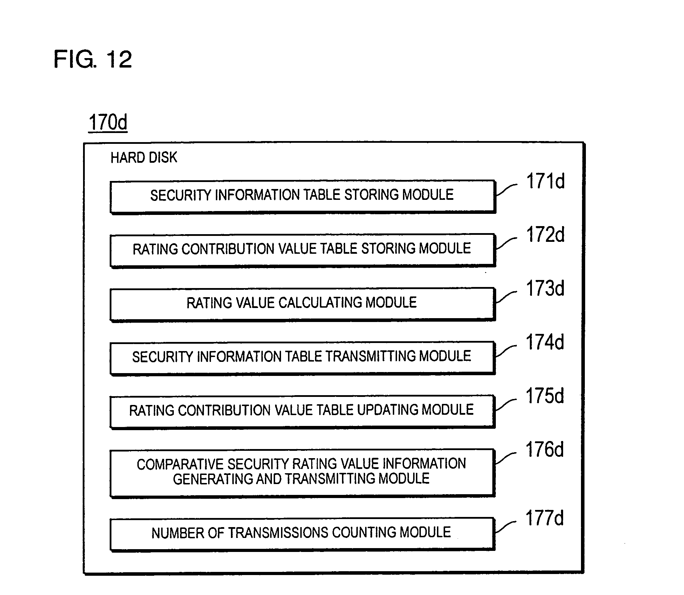

However, the execution program being executed by a CPU (not shown) of security rating server 100d is different from the execution program executed by CPU (not shown) of security rating server 100c shown in Fig. 9 in that it has a number of transmissions counting module 177d as shown in Fig. 12.

A security information tables storing module 171d, arating contribution value table storing module 172d, a rating value calculation module 173d, a security information table transmitting module 174d, rating contribution value table updating module 175d, and comparable security rating value information generation and transmission module 176d in the execution program to be executed by the CPU (not shown) of security rating server 100d shown in Fig. 11 are identical software to security information table storing module 171c, rating contribution value table storing module 172c, rating value calculation module 173c, security information table transmitting module 174c, rating contribution value table updating module 175c, and comparable security rating value information generation and transmission module 176c in the execution program to be executed by CPU (not shown) of security rating server 100c shown in Fig. 9 respectively.

Number of transmissions counting module 177d in the execution program executed by CPU (not shown) of security rating server 100d shown in Fig. 11 increments by one the number of transmissions, which is a security element to be recorded on this security information table, when security information server 100d transmits a security information table to security rating client 200b.

The number of transmissions here is the data indicating the number of frequencies a certain security information table is transmitted to the security rating client.

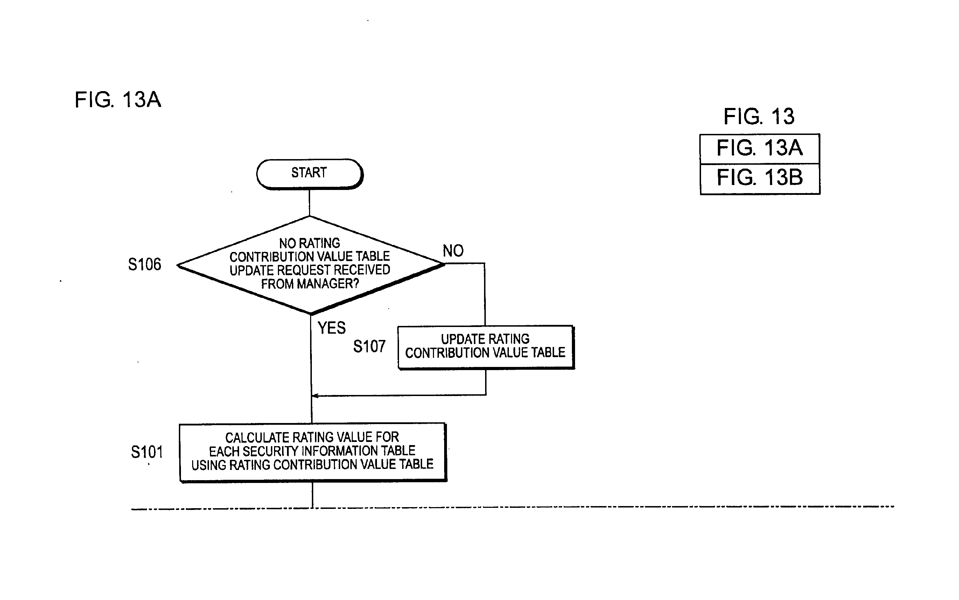

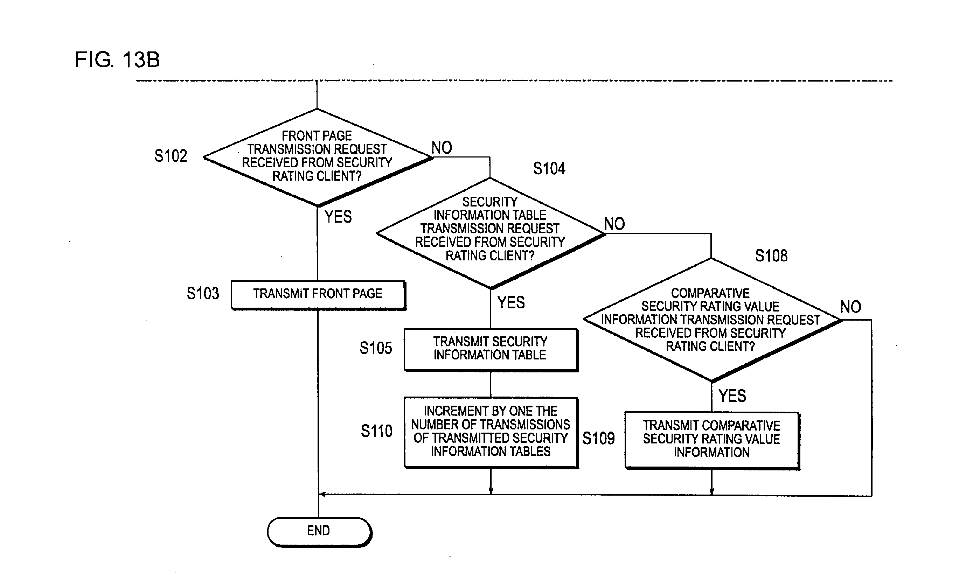

Security rating server 100d, which executes the execution program containing the number of transmissions count module 177d by means of CPU, performs the process shown in Fig. 13.

Of the processes performed by security rating server 100d shown in Fig. 11, steps S101 through S109 are identical respectively to steps S101 through 109 performed by security rating server 100c in the third embodiment described in the above.

After transmitting the security information table to the security rating client in step S106 as mentioned above, security rating server 100d increments by one the number of transmissions, which is a security element to be recorded on the transmitted security information table in step S110.

Although a desktop PC is indicated as security rating client 200b as shown in Fig. 11 in the security rating system according to the fourth embodiment of the present invention, the security rating client of the invention is not limited to a desktop PC.

The security rating client of the present invention can be any type of client computers such as desktop PC, notebook PC, cellular telephones and PDA, as long as they can transmit security information table transmission requests to a security rating server, receive security information tables from the security rating server, transmit comparative security rating value information transmission request to the security rating sever, and receive comparative security rating value information from the security rating server.

Although a PDA is indicated as manager 400 as shown in Fig. 11 in the security rating system according to the fourth embodiment of the present invention, the manager of the invention is not limited to a PDA.

Therefore, the manager of the present invention include various types of client computers such as desktop PC, notebook PC, cellular telephones, and PDA that are capable of transmitting rating contribution value table update requests to the security rating server.

As described in the above, the number of transmissions of the security information table is incremented by one when the security information table is transmitted to the security rating client 200b in the security rating system according to the fourth embodiment of the present invention, and this number of transmissions is a security element and has a rating contribution value.

Consequently, in the security rating system according to the fourth embodiment of the present invention, the number of cycles the security information table is transmitted to the security rating client, i.e., the number of accesses of the security information table made by the users can be reflected upon the rating value of the security.

Thus, the popularity of the project among the users can be reflected upon the rating value of the security based on the number of accesses in the security rating system according to the fourth embodiment.

In the first through fourth embodiments described above, each execution program can be stores in said manager control program memory media such as CD-ROM (Compact Disc Read Only Memory) and DVD-ROM (Digital Versatile Disk Read Only Memory) and transferred or distributed.

Moreover, in the first through fourth embodiments described above, it is also possible to store modules of said execution program indifferent recording media in a distributed manner and transfer or distribute memory media containing one or more modules, although not containing the execution program itself.

Therefore, it is possible for a transferor of a recording medium on which an execution program is stored, or a transferor of a recording medium on which one or more module (s) is stored, to transfer the execution program or the one or more module (s) to a transferee without going through a network.

As can be seen from the above description, the present invention provides a means of assigning the same rating contribution value to all securities sharing an identical security element as far as said security element is concerned. Moreover, according to the present invention, the sum of rating contribution values of all security elements becomes the rating value that define the rating of the particular security with a numerical value.

Thus, according to the present invention, it is possible to provide a means of objectively rating a security in the sense that all securities with a common security element, for example, the "Guarantor, " e.g., "the Government of Japan," are assigned with the same rating contribution value.

## Claims

1. A security rating system comprising a security rating server (100a) and a security rating client (200a) connected with said security rating server (100a) via a communication network (300), wherein
said security rating server (100a) comprises:
a security information table storing means (171a) for storing a security information table that records security elements, i.e., data that constitute a security measure, for each security;
a rating value calculating means (173a) for calculating a sum of rating contribution values for each security information table using a rating contribution value table, which stores contributing values for rating of securities belonging to said security elements as rating contribution values, and recording said sum of rating contribution values thus calculated as a rating value in said security information table; and
a security information table transmitting means (174a) for transmitting said security information table to said security rating client (200a) when a security information table transmission request is received from said security rating client (200a), and
said security rating client (200a) comprises:
a security information table transmission request transmitting means for transmitting said security information table transmission request to said security rating server (100a), and
a security information table receiving means for receiving said security information table from said security rating server (100a).

2. A security rating system comprising a security rating server (100b) and a security rating client (200a) as well as a manager (400) connected with said security rating server (100a) via a communication network (300), wherein
said security rating server (100b) comprises:
a security information table storing means (171b) for storing a security information table that records security elements, i.e., data that constitute a security measure, for each security;
a rating value calculating means (173b) for calculating a sum of rating contribution values for each security information table using a rating contribution value table, which stores contributing values for rating of securities belonging to said security elements as rating contribution values, and recording said sum of rating contribution values thus calculated as a rating value in said security information table;
a security information table transmitting means (174b) for transmitting said security information table to said security rating client (200a) when a security information table transmission request is received from said security rating client (200a); and
a rating contribution value table updating means (175b) for updating said rating contribution value to be recorded on said rating contribution value table when a rating contribution value table updating request is received from said manager (400),
said security rating client (200a) comprises:
a security information table transmission request transmitting means for transmitting said security information table transmission request to said security rating server (100b), and
a security information table receiving means for receiving said security information table from said security rating server (100b); and
said manager (400) comprises a rating contribution value table updating request transmitting means for transmitting said rating contribution value table updating request to said security rating server (100a).

3. A security rating system described in claim 1 or claim 2, wherein
said security rating server (100c) further comprises:
a comparative security rating value information generating and transmitting means for generating comparative security rating value information comparing said security rating values for a plurality of securities recorded on their respective security information tables and transmitting it to said security rating client (200b) when a comparative security rating value information transmission request is received from said security rating client (200b), and
said security rating client (200a) further comprises:
a comparative security rating value information transmission request transmitting means for transmitting said comparative security rating value information transmission request to said security rating server (100c); and
a comparative security rating value information receiving means for receiving said comparative security rating value information from said security rating sever (100c).

4. A security rating system described either one of claims 1 through 3, wherein
said security rating server (100d) further comprises:
a transmission counting means for incrementing by one the number of transmissions, which is a security element recorded on said security information table, each time when said security information table is transmitted to said security rating client (200b) by said security information table transmitting means.

5. A security rating method used in a security rating system comprising a security rating server (100a) and a security rating client (200a) connected with said security rating server (100a) via a communication network (300), comprising:
a security information table storing step for said security rating server (100a) to store a security information table that records security elements, i.e., data that constitute a security measure, for each security;
a rating value calculating step for said security rating server (100a) to calculate a sum of rating contribution values for each security information table using a rating contribution value table, which stores contributing values for rating of securities belonging to said security elements as rating contribution values, and recording said sum of rating contribution values thus calculated as a rating value in said security information table;
a security information table transmission request transmitting step for said security rating client (200a) to transmit a security information table transmission request to said security rating server (100a);
a security information table transmitting step for said security rating server (100a) to transmit said security information table to said security rating client (200a) when said security information table transmission request is received from said security rating client (200a); and
a security information table receiving step for said security rating client (200a) to receive said security information table from said security rating server (100a).

6. A security rating method used in a security rating system having a security rating server (100b) and a security rating client (200a) as well as a manager (400) connected with said security rating server (100b) via a communication network (300), comprising:
a security information table storing step for said security rating server (100b) to store a security information table that records security elements, i.e., data that constitute a security, for each security;
a rating value calculating step for said security rating server (100b) to calculate a sum of rating contribution values for each security information table using a rating contribution value table, which stores contributing values for rating of securities belonging to said security elements as rating contribution values, and record said sum of rating contribution values thus calculated as a rating value in said security information table;
a security information table transmission request transmitting step for said security rating client (200a) to transmit a security information table transmission request to said security rating server (100b);
a security information table transmitting step for said security rating server (100b) to transmit said security information table to said security rating client (200a) when said security information table transmission request is received from said security rating client (200a);
a security information table receiving step for said security rating client (200a) to receive said security information table from said security rating server (100b) ;
a rating contribution value table updating request transmitting step for said manager (400) to transmit a rating contribution value table update request to said security rating server (100b), and
a rating contribution value table updating step for said security rating server (100b) to update said rating contribution value to be recorded on said rating contribution value table when a rating contribution value table updating request is received from said manager (400).

7. A security rating method described in claim 5 or claim 6 further comprising:
a comparative security rating value information transmission request transmitting step for said security rating client (200b) to transmit a comparative security rating value information transmission request to said security rating server (100c);
a comparative security rating value information generating and transmitting step for said security rating server (100c) to generate comparative security rating value information comparing said security rating values for a plurality of securities recorded on their respective security information tables and transmit it to said security rating client (200b) when a comparative security rating value information transmission request is received from said security rating client (200b); and
a comparative security rating value information receiving step for said security rating client (200b) to receive said comparative security rating value information from said security rating server (100c).

8. A security rating method described either one of claims 5 through 7 further comprising:
a transmission counting step for said security rating server (100d) to increment by one the number of transmissions, which is a security element recorded on said transmitted security information table, each time when said security information table is transmitted to said security rating client (200b).

9. A security rating server connected with a security rating client via a communication network comprising:
a security information table storing means for storing a security information table that records security elements, i.e., data that constitute a security, for each security;
a rating value calculating means for calculating a sum of rating contribution values for each security information table using a rating contribution value table, which stores contributing values for rating of securities belonging to said security elements as rating contribution values, and recording said sum of rating contribution values thus calculated as a rating value in said security information table; and
a security information table transmitting means for transmitting said security information table to said security rating client when receiving a security information table transmission request is received from said security rating client.

10. A security rating server connected with a security rating client as well as a management client via a communication network comprising:
a security information table storing means for storing a security information table that records security elements, i.e., data that constitute a security, for each security;
a rating value calculating means for calculating a sum of rating contribution values for each security information table using a rating contribution value table, which stores contributing values for rating of securities belonging to said security elements as rating contribution values, and recording said sum of rating contribution values thus calculated as a rating value in said security information table;
a security information table transmitting means for transmitting said security information table to said security rating client when receiving a security information table transmission request is received from said security rating client; and
a rating contribution value table updating means for updating said rating contribution value to be recorded on said rating contribution value table when a rating contribution value table updating request is received from said manager.

11. A security rating server described in claim 9 or claim 10 further comprising;
a comparative security rating value information generating and transmitting means for generating comparative security rating value information comparing said security rating values for a plurality of securities recorded on their respective security information tables and transmitting it to said security rating client when a comparative security rating value information transmission request is received from said security rating client.

12. A security rating server described in one of claims 9 through 11 further comprising:
a transmission counting means for incrementing by one the number of transmissions, which is a security element recorded on said transmitted security information table, each time when said security information table is transmitted to said security rating client by said security information table transmitting means.

13. A security rating server control method for a security rating server connected with a security rating client via a communication network comprising:
a security information table storing step for storing a security information table that records security elements, i.e., data that constitute a security, for each security;
a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table; and
a security information table transmitting step for transmitting said security information table to said security rating client when a security information table transmission request is received from said security rating client.

14. A security rating server control method for a security rating server connected with a security rating client as well as a management client via a communication network comprising:
a security information table storing step for storing a security information table that records security elements, i.e., data that constitute a security, for each security;
a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table;
a security information table transmitting step for transmitting said security information table to said security rating client when a security information table transmission request is received from said security rating client; and
a rating contribution value table updating step for updating said rating contribution value to be recorded on said rating contribution value table when a rating contribution value table updating request is received from said manager.

15. A security rating server control method described in claim 13 or claim 14 further comprising:
a comparative security rating value information generating and transmitting step for generating comparative security rating value information comparing said security rating values for a plurality of securities recorded on their respective security information tables and transmitting it to said security rating client when a comparative security rating value information transmission request is received from said security rating client.

16. A security rating server control method described in one of claims 13 through 15 further comprising:
a transmission counting step for incrementing by one the number of transmissions, which is a security element recorded on said transmitted security information table, each time when said security information table is transmitted to said security rating client.

17. A security rating server control program for causing a security rating server connected with a security rating client via a communication network to execute:
a security information table storing step for storing a security information table that records security elements, i.e., data that constitute a security, for each security;
a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table; and
a security information table transmitting step for transmitting said security information table to said security rating client when a security information table transmission request is received from said security rating client.

18. A security rating server control program for causing a security rating server connected with a security rating client as well as a management client via a communication network to execute:
a security information table storing step for storing a security information table that records security elements, i.e., data that constitute a security, for each security;
a rating value calculating step for calculating a sum of rating contribution values for each security information table using a rating contribution value table, which stores contributing values for rating of securities belonging to said security elements as rating contribution values, and recording said sum of rating contribution values thus calculated as a rating value in said security information table;
a security information table transmitting step for transmitting said security information table to said security rating client when a security information table transmission request is received from said security rating client; and
a rating contribution value table updating step for updating said rating contribution value to be recorded on said rating contribution value table when a rating contribution value table updating request is received from said manager.

19. A security rating server control program described in claim 17 or claim 18 for causing said security rating server to execute:
a comparative security rating value information generating and transmitting step for generating comparative security rating value information comparing said security rating values for a plurality of securities recorded on their respective security information tables and transmitting it to said security rating client when a comparative security rating value information transmission request is received from said security rating client.

20. A security rating server control program described in either one of claims 17 through 19 further causing said security rating server to execute:
a transmission counting step for incrementing by one the number of transmissions, which is a security element recorded on said transmitted security information table, each time when said security information table is transmitted to said security rating client.

21. A computer-readable recording medium storing one of the security rating server control programs described in either one of claims 17 through 20.

22. A security rating client connected with a security rating server via a communication network comprising:
a security information table transmission request transmitting means for transmitting a security information table transmission request to said security rating server; and
a security information table receiving means for receiving from said security rating server a security information table that records security elements, i.e., data that constitute a security, and a rating value, which is a sum of rating contribution values belonging to said security elements, for each security.

23. A security rating client described in calim 22 further comprising:
a comparative security rating value information transmission request transmitting means for transmitting a comparative security rating value information transmission request to said security rating server; and
a comparative security rating value information receiving means for receiving from said security rating server comparative security rating value information that compares said security rating values for a plurality of securities recorded on their respective security information tables.

24. A security rating client control method for a security rating client connected with a security rating server via a communication network comprising:
a security information table transmission request transmitting step for transmitting a security information table transmission request to said security rating server; and
a security information table receiving step for receiving from said security rating server a security information table that records security elements, i.e., data that constitute a security, and a rating value, which is a sum of rating contribution values belonging to said security elements, for each security.

25. A security rating client control method described in claim 24 further comprising:
a comparative security rating value information transmission request transmitting step for transmitting a comparative security rating value information transmission request to said security rating server; and
a comparative security rating value information receiving step for receiving from said security rating server comparative security rating value information that compares said security rating values for a plurality of securities recorded on their respective security information tables.

26. A security rating client control program for causing a security rating client connected with a security rating server via a communication network to execute:
a security information table transmission request transmitting step for transmitting a security information table transmission request to said security rating server; and
a security information table receiving step for receiving from said security rating server a security information table that records security elements, i.e., data that constitute a security, and a rating value, which is a sum of rating contribution values belonging to said security elements, for each security.

27. A security rating client control program described in claim 26 for further causing said security rating client to execute:
a comparative security rating value information transmission request transmitting step for transmitting a comparative security rating value information transmission request to said security rating server; and
a comparative security rating value information receiving step for receiving from said security rating server comparative security rating value information that compares said security rating values for a plurality of securities recorded on their respective security information tables.

28. A computer-readable recording the medium storing security rating client control program described in claim 26 or claim 27.

29. A manager connected with a security rating server via a communication network comprising:
a rating contribution value table updating request transmitting means for transmitting to said security rating server a rating contribution value table updating request that requests to updates a rating contribution value stored in said rating contribution value table.

30. A manager control method for a manager connected with a security rating server via a communication network comprising:
a rating contribution value table updating request transmitting step for transmitting to said security rating server a rating contribution value table updating request that requests to updates a rating contribution value stored in said rating contribution value table.

31. A manager control program for causing a manager connected with a security rating server via a communication network to execute:
a rating contribution value table updating request transmitting step for transmitting to said security rating server a rating contribution value table updating request that requests to updates a rating contribution value stored in said rating contribution value table.

32. A computer-readable recording medium storing the manager control program described in claim 31.
